# EUROPÄISCHE PATENTANMELDUNG

(11) **EP 4 585 360 A2**
(43) Veröffentlichungstag der Anmeldung: **16.07.2025**
(21) Anmeldenummer: 25150458.5
(22) Anmeldetag: 07.01.2025
(51) Int. Cl.: B23P 19/10, B23P 19/06, B23Q 5/04, B25J 17/02

(54) **DREHKOPFEINHEIT FÜR EIN DREHKOPFWERKZEUG, DREHKOPFWERKZEUG UND VERFAHREN ZUM AUSFÜHREN EINES BEARBEITUNGSVORGANGS AN EINER ÖFFNUNG EINES WERKSTÜCKS SOWIE ZENTRIERSCHRAUBELEMENT**

(30) Priorität: 11.01.2024 DE 102024200246
(71) Anmelder: VOLKSWAGEN AG, 38440 Wolfsburg (DE)
(72) Erfinder: Meyerhoff, Rolf, 26723 Emden (DE)

(57) **Zusammenfassung**

Die Erfindung betrifft eine Drehkopfeinheit (1), ein Drehkopfwerkzeug (2), ein Verfahren, bei dem mittels des Drehkopfwerkzeugs (2) an einer Öffnung (83) eines Werkstücks (84) ein Bearbeitungsvorgang ausgeführt wird, sowie ein Zentrierschraubelement (3). Mittels einer Antriebskörperlängsmittenachse (4) eines Antriebskörpers (K1) ist eine Drehkopfhauptachse (5) der Drehkopfeinheit (1) definiert. Eine Abtriebskörperlängsmittenachse (7) eines Abtriebskörpers (K2) und ein Effektorpunkt (8) eines drehfest mit dem Abtriebskörper (K2) verbundenen Drehwerkzeugeffektors (6) fallen zusammen. Die Drehkopfeinheit (1) umfasst ein antriebsseitiges homokinetisches Gelenk (G1) mit einem ersten antriebsseitigen Gelenkelement (G1.1), das drehfest am Antriebskörper (K1) ausgebildet ist, und mit einem zweiten antriebsseitigen Gelenkelement (G1.2), das mit dem ersten antriebsseitigen Gelenkelement (G1.1) gelenkig verbunden ist, sowie ein abtriebsseitiges homokinetisches Gelenk (G2) mit einem ersten abtriebsseitigen Gelenkelement (G2.1), das drehfest am Abtriebskörper (K2) ausgebildet ist, und mit einem zweiten abtriebsseitigen Gelenkelement (G2.2), das mit dem ersten abtriebsseitigen Gelenkelement (G2.1) gelenkig verbunden ist, wobei die zweiten Gelenkelemente (G1.2, G2.2) entlang einer gemeinsamen geraden Kopplungskörperlängsmittenachse (9) fest miteinander zu einem Gelenkkopplungskörper (10) verbunden sind.

## Beschreibung

Die vorliegende Erfindung betrifft eine Drehkopfeinheit für ein Drehkopfwerkzeug und ein Drehkopfwerkzeug mit einer solchen Drehkopfeinheit sowie ein Verfahren zum Ausführen eines Bearbeitungsvorgangs an einer Öffnung eines Werkstücks mittels eines solchen Drehkopfinierkzeugs.

Fehlpositionierungen von Montageteilen vor einem automatischen bzw. robotergestützten Bearbeitungsverfahren, insbesondere einem automatischen Verschrauben zweier Bauteile, resultieren aus Prozess-, Betriebsmittel- und Einzelteiltoleranzen. Toleranzen sind nicht vollständig eliminierbar und sind nur mit progressiv wachsendem technischen und finanziellen Aufwand reduzierbar. Beispielsweise können Bauteile mit vormontierten Gummilagern, Federn und flexiblen Aufhängungen in den Betriebsmitteln nur innerhalb eines relativ großen Toleranzfeldes an die Hauptbaugruppe (beispielsweise an eine Karosse) zur automatischen Verschraubung automatisiert herangeführt werden. Starr programmierte Roboter in Verbindung mit Standardschraubern ohne Toleranzausgleich würden wiederholgenau die Soll-Schraubkoordinaten der Verschraubungsstelle anfahren. Findet sich an der angefahrenen Soll-Position keine vollständige Überdeckung der Schraubachse mit der Schraubbuchse des Montageteiles, kommt es an der Verschraubungsstelle zur Fehlverschraubung (Schraube fasst nicht oder verklemmt im ersten Gewindegang). Mittels Spezialschrauben oder -muttern, die Zentrierkegel aufweisen, können die zu verschraubenden Bauteile im Verschraubungsprozess zwar zueinander ausgerichtet werden, jedoch muss zuvor die Gewindebuchse mit vollständigem Toleranzausgleich vom Roboterschrauber innerhalb des zu erwartenden Toleranzbereiches mit der Schraube beim "Gewindegangsuchen" sicher getroffen und eingeschraubt werden.

Bei automatisierten Schraubprozessen (zum Beispiel in der Automobilmontage, etwa bei einer Federbeinverschraubung) sind robotergeführte Schrauber mit technisch eingeschränktem Toleranzausgleich im Einsatz. Der gesamte Schrauber ist hierbei schwimmend und technisch aufwändig elektromagnetisch bremsbar gelagert. Der Toleranzausgleich erfolgt beim Gewindegangsuchen während der Schraubbewegung des magnetisch gehaltenen Schraubbolzens, wobei hohe Massenträgheitskräfte des mehrere Kilogramm schweren Schraubers und die Lagerreibung der schwimmenden Aufnahme des Schraubers an einem Grundgestell ausgeglichen bzw. überwunden werden müssen. Die Beschleunigungsreaktionskräfte und die Bewegungsgegenkräfte aus der Lagerreibung beim Toleranzausgleich resultieren aus der großen Masse des gesamten schwimmend gelagerten Schraubers und können mithilfe des mit geringem Kraftniveau in der Schraubnuss gehaltenen Bolzens oftmals nicht prozesssicher überwunden werden. Es kommt dadurch häufig zu Fehlverschraubungen und damit zu ungenügender Prozesssicherheit und kostentreibender Nacharbeit. Bei Mehrfachschraubern lassen sich relative Toleranzen zwischen den Verschraubungspunkten gar nicht ausgleichen. Daher muss die schwimmende Lagerung der gesamten Schraubtechnik am Roboterarm mit hohem technischem Aufwand in den Verfahr- und Schwenkprozessen des Roboters mit elektromagnetischen Bremsen blockiert werden.

Beim Spezialfall der Federbeinverschraubung kommt erschwerend hinzu, dass Ausrichtdorne von Federbeinen aus wirtschaftlichen Gründen aus weichem Aluminium am Federbeinlager des Federbeins angegossen sind und so eine ungünstige Material- bzw. Reibpaarung zwischen Stahlkarosse und Federbein vorliegt. Aufgrund dieser ungünstigen Reibpaarung können die Ausrichtdorne sich an einem Rohbau-Stanzgrat festfressen, was zu einer unvollständigen Bauteilausrichtung vor dem Verschrauben führt. Zudem reduziert ein technisch fehlerhafter Freiheitsgrad bei der Aufnahme des Federbeines im Betriebsmittel die Präzision der Vorpositionierung des Federbeines relativ zur Karosse bei der automatischen Montage. Denn ein zu großes Rundloch im Federbeinteller der Karosse (statt eines definiert ausgerichteten Langlochs mit enger Breitenpassung), führt zu einer indifferenten Bauteilaufnahme des Federbeins auf dem Betriebsmittel Karosse. Hierdurch ist ein unerwünschtes Verschwenken des Federbeines vor dem Fügen möglich, wodurch das Toleranzstreufeld im automatischen Montageprozess weiter vergrößert wird.

Diese Probleme treten analog bei weiteren automatischen bzw. robotergestützten Bearbeitungsverfahren auf, bei denen mit einem Angriffselement eines Werkzeugs möglichst genau ein Punkt an einer Werkstückoberfläche anzufahren und dann in das Werkstück translatorisch, das heißt in gerader Vorschubrichtung, einzudringen ist, so etwa bei einem Senken, Gewindeschneiden, einem Bohren etc.

Die DE 198 12 654 A schlägt einen Adapter vor, mittels dessen ein Werkzeug drehfesten mit einer Drehantriebseinrichtung verbindbar ist. Der Adapter besteht aus einem an der Drehantriebseinrichtung befestigbaren Drehantriebskupplungsteil, einem Gehäuseteil und einem Werkzeugkupplungsteil, das über ein Zwischenstück drehfest mit dem Drehantriebskupplungsteil verbunden ist. Das Zwischenstück ist mit dem Drehantriebskupplungsteil mittels einer ersten Schiebeführung gekoppelt, die ein Verschieben des Zwischenstücks in einer ersten Richtung quer zur Adapterlängsachse ermöglicht, wobei das Werkzeugkupplungsteil mit dem Zwischenstück mittels einer zweiten Schiebeführung gekoppelt ist, die ein Verschieben des Werkzeugkupplungsteils relativ zum Zwischenstück quer zur Adapterlängsachse in einer zweiten Richtung ermöglicht, die insbesondere senkrecht zur ersten Richtung liegt.

Des Weiteren schlägt die DE 10 2015 214 003 A1 eine Ausgleichsvorrichtung für eine Handhabungseinrichtung vor, die zwischen einem Manipulator und einem Endeffektor der Handhabungseinrichtung anordenbar ist. Die Ausgleichsvorrichtung umfasst ein Kugelgelenk, dessen Kugelaufnahme einen Rampenbereich umfasst, wobei ein Kugelgelenkkopf des Kugelgelenks von einer Normallage in einer Querrichtung zu einer Achse der Ausgleichsvorrichtung in eine Ausgleichslage verschiebbar ist, so dass das Kugelgelenk ein Verschiebegelenk bildet.

Auch die DE 10 2021 208 632 A1 offenbart eine Ausgleichsvorrichtung für eine Handhabungseinrichtung, die einen ersten Schnittstellenabschnitt für den Anschluss an den Manipulator, einen zweiten Schnittstellenabschnitt für den Anschluss an den Endeffektor und eine zwischengefügten Versatzkompensationseinrichtung umfasst, welche eine Vorspanneinrichtung aufweist, die zwischen den Schnittstellenabschnitten zwischengefügt ist und diese gegeneinander vorspannt. Mittels einer Klemmvorrichtung ist die Ausgleichsvorrichtung in einen freien ersten Betriebszustand schaltbar, in welchem die Ausgleichsvorrichtung in den sechs Bewegungsfreiheitsgraden aus einer Ausgangslage in eine Ausgleichslage beweglich ist. Eine Auswerteeinrichtung ist dazu ausgebildet, aus mittels einer Sensoreinrichtung bereitgestellten Sensorsignalen eine Relativposition zwischen dem ersten Schnittstellenabschnitt und dem zweiten Schnittstellenabschnitt zu bestimmen.

Aufgabe der vorliegenden Erfindung ist es, Lage- und/oder Fertigungstoleranzen von Werkstücken bei deren Bearbeitung möglichst effizient auszugleichen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind kategorie- und ausführungsformübergreifend zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Gemäß der Erfindung wird eine Drehkopfeinheit für ein Drehkopfwerkzeug vorgeschlagen. Die Drehkopfeinheit weist einen Antriebskörper, der insbesondere als ein Antriebszylinder ausgebildet ist, einen Abtriebskörper, der insbesondere als ein Abtriebszylinder ausgebildet ist, sowie zwei homokinetische Gelenke auf, mittels derer der An- und der Abtriebskörper gelenkig miteinander verbunden sind. Ferner wird ein Drehkopfwerkzeug vorgeschlagen, das die Drehkopfeinheit und eine Antriebseinheit (beispielsweise eine elektrische Maschine) aufweist, wobei der Antriebskörper und die Antriebseinheit drehfest miteinander verbunden sind. Zum Beispiel können eine Antriebswelle der Antriebseinheit und der Antriebskörper direkt oder indirekt, beispielsweise mittels einer oder mehr Getriebestufen, miteinander verbunden sein.

Durch eine Antriebskörperlängsmittenachse des Antriebskörpers ist eine Drehkopfhauptachse der Drehkopfeinheit definiert. Der Abtriebskörper ist vom Antriebskörper separat ausgebildet und mit einem Drehwerkzeugeffektor drehfest verbunden oder verbindbar, derart, dass eine Abtriebskörperlängsmittenachse des Abtriebskörpers und ein Effektorpunkt des Drehwerkzeugeffektors zusammenfallen. Der Abtriebskörper kann zum Beispiel eine Verbindungseinrichtung aufweisen, etwa ein Spannfutter, mittels derer der Drehwerkzeugeffektor drehfest am Abtriebskörper angebracht werden kann. Es ist aber ebenso zu verstehen, dass der Drehwerkzeugeffektor bereits durch eine solche Verbindungseinrichtung gebildet sein kann. Ferner ist es denkbar, dass der Abtriebskörper und der Drehwerkzeugeffektor einstückig miteinander ausgebildet oder kraft-, form- und/oder stoffschlüssig miteinander verbunden sind. Als Drehwerkzeugeffektor ist jeglicher Werkzeugeffektor denkbar, der zum Ausüben seiner Funktion um dessen Längsmittenachse gedreht wird. So kann der Drehwerkzeugeffektor zum Beispiel ausgebildet sein als Schraubnuss, Schraubendreher, Bohrer, Außen- oder Innengewindeschneider, Honahle, Reibahle, Fräser, Kegelsenker etc. Beim Effektorpunkt handelt es sich um einen vorgegebenen Punkt des Drehwerkzeugeffektors, zum Beispiel um einen Mittelpunkt der Schraubnuss, um eine Spitze oder einen Mittelpunkt einer Klinge des Schraubendrehers, um eine Spitze einer Schneide des Bohrers, des Gewindeschneiders, der Hon- oder Reibahle, des Fräsers, des Kegelsenkers etc. Ferner kann der Effektorpunkt durch einen Tool Center Point eines Robotersystems gebildet sein, bei welchem das Drehkopfwerkzeug an einem Endeffektor des Roboters befestigt ist. Allgemein ist der Effektorpunkt der für eine Raumbewegung und Funktion des Drehwerkzeugeffektors relevante Punkt. Eines der homokinetischen Gelenke bildet ein antriebsseitiges homokinetisches Gelenk der Drehkopfeinheit und weist ein erstes antriebsseitiges Gelenkelement auf, das drehfest am Antriebskörper ausgebildet ist. Des Weiteren weist das antriebsseitige Gelenk ein zweites antriebsseitiges Gelenkelement auf, wobei die beiden antriebsseitigen Gelenkelemente des antriebsseitigen homokinetischen Gelenks gelenkig miteinander verbunden sind. Durch das andere der homokinetischen Gelenke ist ein abtriebsseitiges homokinetisches Gelenk der Drehkopfeinheit gebildet, das ein erstes abtriebsseitiges Gelenkelement aufweist, das drehfest am Abtriebskörper ausgebildet ist. Zudem weist das abtriebsseitige homokinetische Gelenk ein zweites abtriebsseitiges Gelenkelement auf, wobei die beiden abtriebsseitigen Gelenkelemente des abtriebsseitigen homokinetischen Gelenks gelenkig miteinander verbunden sind. Die zweiten Gelenkelemente sind entlang einer gemeinsamen geraden Kopplungskörperlängsmittenachse zu einem Gelenkkopplungskörper fest - also sowohl drehfest als auch axial zueinander unverschiebbar - miteinander verbunden bzw. aneinander fixiert.

Bei einem erfindungsgemäßen Verfahren wird mittels des Drehkopfwerkzeugs - insbesondere mittels eines einen Roboter, insbesondere Gelenkarmroboter, aufweisenden Robotersystems oder mittels einer stationären automatischen Schraub-/Montagestation einer Fertigungsstraße - an einer Öffnung eines Werkstücks ein Bearbeitungsvorgang ausgeführt. Hierbei wird zunächst ein Effektorpunkt des drehfest mit dem Abtriebskörper verbundenen Drehwerkzeugeffektors an eine vorgegebene Sollkoordinate gebracht bzw. bewegt, derart, dass die Drehkopfhauptachse ein vorgegebenes Toleranzfeld schneidet. Das Toleranzfeld ist beispielsweise eine imaginäre Kreisscheibe, dessen Umfangskreis durch einen Rand bzw. eine Öffnungskante der zu bearbeitenden Öffnung vorgegeben ist. Das heißt, durch das Ausbilden der Öffnung wird das Toleranzfeld festgelegt. Danach wird das Drehkopfwerkzeug in gerader Vorschubrichtung bewegt, wobei eine Spitze des Drehwerkzeugeffektors oder eine Spitze eines mit dem Drehwerkzeugeffektor gekoppelten Halbzeugs (zum Beispiel einer Schraube) an einer Kante der Öffnung abgleitet, wodurch das erste abtriebsseitige Gelenkelement aus der Drehkopfhauptachse ausgelenkt wird und der Effektorpunkt auf eine Längsmittenachse der Öffnung fällt. Anders ausgedrückt wird der Abtriebskörper relativ zum Antriebskörper rotatorisch verschwenkt und/oder translatorisch verrückt. Dabei oder anschließend wird der Antriebskörper mittels der Antriebseinheit angetrieben und folglich das Werkstück bzw. dessen Öffnung bearbeitet, zum Beispiel indem die Öffnung aufgebohrt, angesenkt wird, in die Öffnung ein Gewinde geschnitten wird, eine Schraube in die Öffnung eingeschraubt wird etc. Das Verfahren ist analog mit einem von einer Werkstückoberfläche hervorspringenden Bolzen einsetzbar, zum Beispiel in Verbindung mit einem Stehbolzen, auf den eine Schraubmutter aufgeschraubt wird und/oder auf den ein Außengewinde geschnitten wird etc.

Lage- und/oder Fertigungstoleranzen des Werkstücks werden dank der mittels der homokinetischen Gelenke der Drehkopfeinheit besonders effizient und zunächst ohne zusätzlichen Steuerungs-/Regelungsaufwand ausgeglichen. So kann bei - insbesondere bei automatischen, beispielsweise robotergestützten - Bearbeitungsvorgängen besonders einfach bzw. aufwandsarm eine gleichbleibend hohe Qualität erzielt werden. Besonders hervorzuheben ist die Ausgestaltung des antriebsseitigen und des abtriebsseitigen Gelenks als jeweiliges homokinetisches Gelenk bzw. Gleichlaufgelenk, mittels dessen eine gleichmäßige Winkelgeschwindigkeits- und Drehmomentübertragung zwischen dem ersten antriebsseitigen Gelenkelement und dem ersten abtriebsseitigen Gelenkelement realisiert ist, selbst wenn die beiden ersten Gelenkelemente zueinander rotatorisch verschwenkt bzw. translatorisch verrückt sind. Hierdurch sind Maßnahmen zum Ausgleichen oder eine Inkaufnahme einer ungleichmäßigen Übertragung des Drehmoments bzw. der Drehzahl zwischen An- und Abtriebskörper vorteilhafterweise obsolet. Der Einfachheit halber wird im Folgenden darauf verzichtet, das Merkmal, dass das antriebsseitige und das abtriebsseitige Gelenk, jeweils ein homokinetisches Gelenk sind, stets explizit zu wiederholen, wenn auf eines oder beide der Gelenke bezuggenommen wird.

Auch bei sehr kompakter Bauweise ist für den Toleranzausgleich von wenigen Millimetern nur eine jeweils geringe Winkeländerung der Gelenke erforderlich. Der maximal erforderliche Durchmesser des möglichen Toleranzfeldes entspricht - zum Beispiel bei einem Verschraubungsprozess - dem Kerndurchmesser des verwendeten Schraubelementes, oder dem konstruktiv durch einen Ausrichtkegel vergrößerten Toleranzbereich am Montageteil um eine Innengewindeöffnung herum. Weitere Vorteile, die sich dank der Drehkopfeinheit, des Drehkopfwerkzeugs und des Verfahrens ergeben sind
- Steigerung der Produktivität durch die Möglichkeit Schraubprozesse zu automatisieren,
- Steigerung der Direktläuferquote in automatisierten Schraubprozessen durch höhere Prozesssicherheit mittels möglichem Toleranzausgleich, der Möglichkeit zur Prozesskorrektur und der geregelten Prozesssteuerung,
- Senken von Nacharbeitsquoten in automatisierten Schraubprozessen,
- Verzicht auf unnötiges und progressiv aufwandsintensives Einengen von Fertigungstoleranzen an Einzelteilen und der Toleranzen im Produktionsprozess,
- Vermeiden von Verschleiß, zufälligen Fehlern und Prozessschwankungen in automatischen Schraubprozessen,
- Vermehrte Nutzung von Schraubverbindungen.

In einer möglichen Weiterbildung des Drehkopfs ist vorgesehen, dass die Gelenke jeweils als ein homokinetisches Kugelgelenk ausgebildet sind. Hierbei ist insbesondere vorgesehen, dass
- das erste antriebsseitige Gelenkelement eine antriebsseitige Kugelgelenkpfanne aufweist, an deren antriebsseitiger Kugelinnenfläche eine antriebs- und gelenkpfannenseitige Übertragungskugelhalterung ausgebildet ist,
- das zweite antriebsseitige Gelenkelement einen antriebsseitigen Gelenkkugelkopf aufweist, an dessen antriebsseitiger Kugelaußenfläche eine antriebs- und kugelkopfseitige Übertragungskugelhalterung ausgebildet ist,
- das erste abtriebsseitige Gelenkelement eine abtriebsseitige Kugelgelenkpfanne aufweist, an deren abtriebsseitiger Kugelinnenfläche eine abtriebs- und gelenkpfannenseitige Übertragungskugelhalterung ausgebildet ist,
- das zweite abtriebsseitige Gelenkelement einen abtriebsseitigen Gelenkkugelkopf aufweist, an dessen abtriebsseitiger Kugelaußenfläche eine abtriebs- und kugelkopfseitige Übertragungskugelhalterung ausgebildet ist.

Zudem weist das antriebsseitige Gelenk eine antriebsseitige Übertragungskugel auf, wohingegen das abtriebsseitige Gelenk eine abtriebsseitige Übertragungskugel aufweist. Weitere an- und/oder abtriebsseitige Übertragungskugeln sind optional. Der antriebsseitige Gelenkkugelkopf ist in der antriebsseitigen Kugelgelenkpfanne gelenkig gelagert, wobei die antriebsseitige Übertragungskugel zwischen der antriebsseitigen Kugelgelenkpfanne und dem antriebsseitigen Gelenkkugelkopf angeordnet ist, indem die antriebsseitige Übertragungskugel in den antriebsseitigen Übertragungskugelhalterungen gelagert ist. Dahingegen ist der abtriebsseitige Gelenkkugelkopf in der abtriebsseitigen Kugelgelenkpfanne gelenkig gelagert, wobei die abtriebsseitige Übertragungskugel zwischen der abtriebsseitigen Kugelgelenkpfanne und dem abtriebsseitigen Gelenkkugelkopf angeordnet ist, indem die abtriebsseitige Übertragungskugel in den abtriebsseitigen Übertragungskugelhalterungen gelagert ist.

Das jeweilige Gelenk der Drehkopfeinheit ist insbesondere nach einer der folgenden Varianten V1, V2 oder V3 ausgebildet.
V1: Die gelenkpfannenseitige Übertragungskugelhalterung weist eine mit der zugehörigen Übertragungskugel geometrisch korrespondierende Hohlkugelkalotte auf, wobei die kugelkopfseitige Übertragungskugelhalterung eine mit der zugehörigen Übertragungskugel geometrisch korrespondierende Kugelrinne aufweist, die sich parallel zur Längsmittenachse und entlang eines Großkreises des Gelenkkugelkopfs erstreckt. Die Übertragungskugel sitzt zum einen in der gelenkpfannenseitigen Hohlkugelkalotte, und zum anderen greift die in der Hohlkugelkalotte sitzende Übertragungskugel in die kugelkopfseitige Kugelrinne ein. Gemäß Variante V1 sind je Gelenk maximal zwei antriebsseitige Übertragungskugeln vorgesehen, die im Abstand von 180° um die Antriebskörperlängsmittenachse angeordnet sind. Zudem weist das jeweilige Gelenk, das nach Variante 1 ausgeführt ist, maximal zwei Übertragungskugeln auf, die im Abstand von 180° um eine Längsmittenachse der Kugelgelenkpfanne angeordnet sind. Dementsprechend weist ein Variante-1-Gelenk der Drehkopfeinheit maximal zwei um 180° zueinander versetzte Hohlkugelkalotten an der Kugelgelenkpfanne und maximal zwei um 180° zueinander versetzte Kugelrinnen am Gelenkkugelkopf auf.
V2: Die gelenkpfannenseitige Übertragungskugelhalterung weist eine mit der zugehörigen Übertragungskugel geometrisch korrespondierende Kugelrinne auf, die sich parallel zur Längsmittenachse und entlang eines Großkreises der Kugelgelenkpfanne erstreckt, wobei die kugelkopfseitige Übertragungskugelhalterung eine mit der zugehörigen Übertragungskugel geometrisch korrespondierende Hohlkugelkalotte aufweist. Die Übertragungskugel sitzt zum einen in der kugelkopfseitigen Hohlkugelkalotte, und zum anderen greift die in der Hohlkugelkalotte sitzende Übertragungskugel in die gelenkpfannenseitige Kugelrinne ein. Gemäß Variante V2 sind je Gelenk maximal zwei antriebsseitige Übertragungskugeln vorgesehen, die im Abstand von 180° um die Kopplungskörperlängsmittenachse angeordnet sind. Ferner weist das jeweilige Gelenk, das nach Variante 2 ausgeführt ist, maximal zwei abtriebsseitige Übertragungskugeln auf, die im Abstand von 180° um die Kopplungskörperlängsmittenachse angeordnet sind. Dementsprechend weist ein Variante-2-Gelenk der Drehkopfeinheit maximal zwei um 180° zueinander versetzte Hohlkugelkalotten am Gelenkkugelkopf und maximal zwei um 180° zueinander versetzte Kugelrinnen an der Kugelgelenkpfanne auf.
V3: Die gelenkpfannenseitige Übertragungskugelhalterung und die kugelkopfseitige Übertragungskugelhalterung weisen jeweils eine mit der zugehörigen Übertragungskugel geometrisch korrespondierende Kugelrinne auf, die sich parallel zur Längsmittenachse und entlang eines Großkreises des zugehörigen Gelenkelements erstreckt, wobei die Übertragungskugel mittels eines Übertragungskugelkäfigs in der zugehörigen Kugelrinnen gehalten wird. Bei dem Übertragungskugelkäfig handelt es sich um ein Bauteil des Gelenks der Drehkopfeinheit, das separat von den beiden Gelenkelementen des entsprechenden Gelenks ausgebildet ist und zwischen den Gelenkelementen angeordnet ist. Die Übertragungskugel greift zum einen in die gelenkpfannenseitige Kugelrinne und zum anderen in die kugelkopfseitige Kugelrinne ein. Ein Variante-3-Gelenk der Drehkopfeinheit kann der zwei oder mehr Übertragungskugeln aufweisen. Dementsprechend weist das Gelenk der Drehkopfeinheit, das gemäß Variante V3 ausgebildet ist, je Übertragungskugel eine gelenkpfannenseitige Kugelrinne und eine kugelkopfseitige Kugelrinne auf.

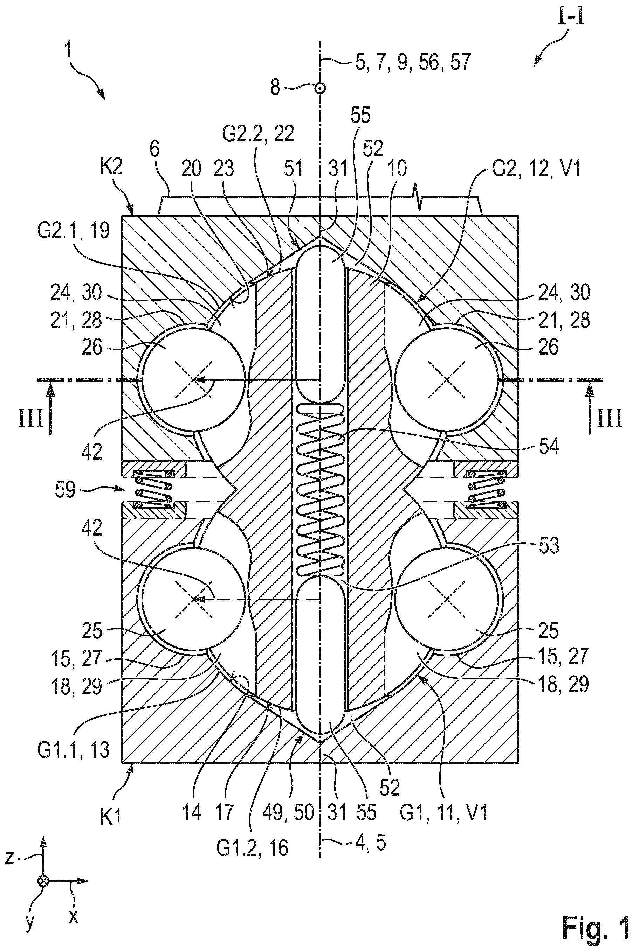

Vorzugsweise sind beide Gelenke gemäß einer gemeinsamen Variante ausgebildet. Dabei weisen die Gelenke insbesondere gleich viele Übertragungskugeln auf. In einer Geradstellung der Drehkopfeinheit, in welcher die Abtriebskörperlängsmittenachse und die Kopplungskörperlängsmittenachse mit der Drehkopfhauptachse bzw. Antriebskörperlängsmittenachse zusammenfallen, sind die antriebsseitigen Übertragungskugeln und die abtriebsseitigen Übertragungskugeln um einen gemeinsamen radialen Übertragungskugelabstand senkrecht von der Kopplungskörperlängsmittenachse beabstandet. Dabei sind jeweils eine der antriebsseitigen und jeweils eine der abtriebsseitigen Übertragungskugeln entlang einer parallel zur Kopplungskörperlängsmittenachse verlaufenden Gerade, die durch die Kugelmittelpunkte der besagten Übertragungskugeln verläuft, angeordnet. Vereinfacht ausgedrückt: es sind immer eine der antriebsseitigen Übertragungskugeln und eine der abtriebsseitigen Übertragungskugeln in Geradstellung der Drehkopfeinheit genau übereinander angeordnet (siehe beispielsweise Fig. 1, Fig. 4, Fig. 7). Insbesondere sind die beiden Gelenke spiegelbildlich zueinander ausgebildet. Ausführungsformen, bei denen eines der Gelenke gemäß einer anderen Variante als das andere der Gelenke ausgebildet ist und/oder eines der Gelenke mehr Übertragungskugeln als das andere der Gelenke aufweist, sind ebenso denkbar.

Die Drehkopfeinheit ist besonders stabil und weist vorteilhaft wenige Einzelteile auf, wenn - wie einer weiteren möglichen Ausgestaltung zufolge - der Antriebskörper und das erste antriebsseitige Gelenkelement stoffschlüssig miteinander verbunden sind. Alternativ oder ergänzend können der Abtriebskörper und das erste abtriebsseitige Gelenkelement stoffschlüssig miteinander verbunden sein. Wiederum alternativ oder zusätzlich können die zweiten Gelenkelemente stoffschlüssig miteinander verbunden sein. Beispielsweise können die stoffschlüssig miteinander verbundenen Elemente der Drehkopfeinheit miteinander verschweißt sein. Insbesondere sind die stoffschlüssig miteinander verbundenen Elemente der Drehkopfeinheit einstückig miteinander ausgebildet. So sind der Antriebskörper sowie das erste antriebsseitige Gelenkelement und/oder der Abtriebskörper sowie das erste abtriebsseitige Gelenkelement und/oder die zweiten Gelenkelemente insbesondere jeweils gemeinsam miteinander urgeformt und/oder aus einem jeweiligen monolithischen Materialblock herausgearbeitet, etwa herausgefräst. So stellt sich beispielsweise der Gelenkkopplungskörper der Drehkopfeinheit als eine Doppelkugel dar.

Die Drehkopfeinheit weist einer weiteren Ausgestaltung zufolge eine drehfest mit dem Antriebskörper bzw. -zylinder verbundene Antriebseinrichtung auf, die einen Stirnradzahnkranz, insbesondere in Form eines Kegelradzahnkranzes, und/oder einen Einspannzapfen aufweist. Der drehfest mit dem Antriebszylinder verbundene Einspannzapfen kann zum Beispiel in ein Einspannfutter einer Werkzeugmaschine eingespannt werden. Durch die daraus resultierende einfache Wechselbarkeit ist die Drehkopfeinheit besonders vielseitig einsetzbar. Über den drehfest mit dem Antriebszylinder verbundenen Stirnradkranz kann der Antriebszylinder als Teil des Drehkopfwerkzeugs angetrieben werden. Hierzu weist ein Antriebsstrang der Antriebseinheit zum Beispiel ein mit dem Stirnradkranz der Drehkopfeinheit kämmendes Antriebsstirnrad auf. Wenn der Stirnradkranz als der Kegelradzahnkranz ausgeführt ist, ist es in vorteilhafter Weise einfach möglich, das die Drehkopfeinheit aufweisende Drehkopfwerkzeug als gewinkeltes Werkzeug auszuführen, beispielsweise als Winkelschrauber oder Winkelbohrer etc.

Gemäß einer weiteren möglichen Ausführungsform weist die Drehkopfeinheit eine gelenkinterne Geradstelleinrichtung auf, welche in ihrem entspannten Zustand die Gelenkelemente in der Geradstellung der Drehkopfeinheit hält und in ihrem gespannten Zustand die Gelenkelemente in Richtung hin zur Geradstellung treibt. Die Geradstelleinrichtung weist je Gelenk eine Geradstelleinheit auf, die eine konkave pyramidale oder keglige Geradstellelementaufnahme umfasst, welche an einem der Gelenkelemente des entsprechenden Gelenks ausgebildet ist. Zudem umfasst die jeweilige Geradstelleinheit eine am entsprechend anderen der Gelenkelemente desselben Gelenks ausgebildete Federelementaufnahme, in welcher ein Federelement angeordnet ist, das ein Geradstellelement der Geradstelleinheit hin zur Geradstellelementaufnahme spannt. Bei dem Geradstellelement handelt es sich zum Beispiel um eine Kugel oder um einen Zapfen, dessen der Geradstellelementaufnahme zugewandtes Ende abgerundet ist. Eine Längsmittenachse der Geradstellelementaufnahme und eine Längsmittenachse der Federelementaufnahme fallen in der Geradstellung zusammen. Die jeweilige Geradstelleinheit erfordert besonders wenig Bauraum, indem deren Federelementaufnahme, Federelement und Geradstellelement im Gelenkkopplungskörper angeordnet sind. Sofern die Gelenke der Drehkopfeinheit wie oben beschrieben jeweils als Kugelgelenk ausgebildet sind, sind die Längsmittenachse der Geradstellelementaufnahme und die Längsmittenachse der Federelementaufnahme in Bezug zur jeweiligen Kugelgelenkpfanne und zum jeweiligen Gelenkkugelkopf miteinander entlang eines gemeinsamen Radius angeordnet. Mittels der Geradstelleinrichtung wird gewährleistet, dass die Drehkopfeinheit, wenn diese nicht quer zu deren Drehkopfhauptachse belastet ist, in einer geraden bzw. gestreckten Position ist. Jeder Bearbeitungsprozess, zum Beispiel Schraubprozess bzw. ein Schraubloch- oder Gewindegangsuchvorgang, beginnt demnach wiederholgenau zentrisch zur Drehkopfhauptachse bzw. im gleichen relativen Abstand zum TCP (Tool Center Point des Roboters oder der stationären Schraubstation).

In möglicher Weiterbildung sind die Federelementaufnahmen durch eine gemeinsame Durchgangsöffnung gebildet, die die zweiten Gelenkelemente entlang der Kopplungskörperlängsmittenachse vollständig durchdringt. Dabei kann zwischen den Federelementen in der Durchgangsöffnung ein Distanzkörper angeordnet sein, an welchem ein jeweiliges vom zugehörigen Geradstellelement abgewandtes Ende der Federelemente abgestützt ist; der Distanzkörper ist dann zwischen den Federelementen entlang der Kopplungskörperlängsmittenachse eingespannt. Alternativ sind die Federelemente einstückig miteinander ausgebildet. Auf diese Weise sind die Geradstelleinrichtung und der Gelenkkopplungskörper besonders einfach herstellbar.

Eine weitere mögliche Ausführungsform sieht vor, dass die Drehkopfeinheit einen Kippwinkelbegrenzungsring aufweist, der entlang der Drehkopfhauptachse unmittelbar zwischen den ersten Gelenkelementen angeordnet ist. Hierunter ist zu verstehen, dass zwischen dem Kippwinkelbegrenzungsring und den Gelenkelementen allenfalls Luft ist, aber kein weiteres Materialelement. Ein Blockmaß des Kippwinkelbegrenzungsrings begrenzt einen Kippwinkel, den die ersten Gelenkelemente miteinander einschließen können. Das Blockmaß ist insbesondere eine Dicke bzw. Stärke des Kippwinkelbegrenzungsrings entlang dessen Längsmittenachse. Durch den Kippwinkelbegrenzungsring wird wirksam verhindert, dass die beiden ersten Gelenkelemente direkt aneinander anstoßen. Der Kippwinkelbegrenzungsring kann als ein einstückiger bzw. monolithischer Ring ausgeführt sein. In einer von der Geradstellung unterschiedlichen Stellung der Drehkopfeinheit ist wenigstens eines der Gelenkelemente dann näher am Kippwinkelbegrenzungsring angeordnet als in der Geradstellung. So ist die Drehkopfeinheit gegen zu starkes Abknicken gesichert.

Eine mögliche Weiterbildung sieht vor, dass der Kippwinkelbegrenzungsring zwischen den ersten Gelenkelementen zumindest quer zur Drehkopfhauptachse bewegbar angeordnet ist. Dadurch ist der Kippwinkelbegrenzungsring zwischen den ersten Gelenkelementen verschiebbar, und wenn der Kippwinkelbegrenzungsring mittels der ersten Gelenkelemente zwischen diesen eingespannt wird, werden die ersten Gelenkelemente dadurch in eine achsparallele Position gezwungen, in welcher die Antriebskörperlängsmittenachse und die Abtriebskörperlängsmittenachse zwar auseinanderfallen, aber parallel zueinander sind.

In noch einer weiteren möglichen Ausführungsform weist der Kippwinkelbegrenzungsring einen ersten Ringkörper und einen zweiten, durchmessergleichen Ringkörper sowie eine Spannfedereinheit auf. Die Spannfedereinheit ist zwischen den Ringkörpern angeordnet, wobei mittels der Spannfedereinheit der erste Ringkörper an das erste antriebsseitige Gelenkelement und der zweite Ringkörper an das erste abtriebsseitige Gelenkelement gespannt ist, wodurch die ersten Gelenkelemente mittels der Spannfedereinheit in eine zueinander parallele Stellung gespannt sind. Die Spannfedereinheit kann genau eine zylindrische Schraubenfeder aufweisen, die einen Feder- bzw. Windungsdurchmesser hat, der zwischen einem Innen- und einem Außendurchmesser der Ringkörper endet, sodass die Schraubenfeder zwischen den Ringkörpern entlang der Längsmittenachse des Kippwinkelbegrenzungsrings bzw. der Ringkörper eingespannt ist. Alternativ kann die Spannfedereinheit zwei oder mehr Schrauben-, Teller-, Blatt- oder Evolutfederelemente aufweisen, die entlang eines Umfangs des Kippwinkelbegrenzungsrings zwischen den Ringkörpern angeordnet und äquidistant voneinander beabstandet sind. Durch den gemäß dieser Ausführungsform ausgebildeten Kippwinkelbegrenzungsring ist eine gelenkexterne Geradstelleinrichtung gebildet, die alternativ oder zusätzlich zu der gelenkinternen Geradstelleinrichtung vorgesehen sein kann. Hierdurch kann ein Aufrichten bzw. Strecken der Drehkopfeinheit von dem Kippwinkelbegrenzungsring bzw. von der gelenkexternen Geradstelleinrichtung übernommen oder - in Verbindung mit der gelenkinternen Geradstelleinrichtung - unterstützt werden.

Eine weitere mögliche Ausführungsform sieht vor, dass die Drehkopfeinheit ein gerades Abstandswellenelement aufweist, mittels dessen die zweiten Gelenkelemente drehfest miteinander verbunden sind. Dadurch kann die Drehkopfeinheit besonders vielseitig und flexibel eingesetzt werden. Insbesondere im Rahmen einer Konzeptionierung bzw. konstruktiven Auslegung der Drehkopfeinheit kann eine maximal mögliche/zulässige rotatorische und translatorische Abweichung zwischen der An- und der Abtriebskörperlängsmittenachse durch eine axiale Länge des Abstandswellenelements definiert werden. Es ist ferner denkbar, dass das Abstandswellenelement längenverstellbar ist, indem es zwei translatorisch zueinander verstellbare Wellenelemente aufweist, die mittels einer Keilwelle-Keilnabe-Verbindung (insbesondere in Verbindung mit einem im Abstandswellenelement angeordneten Linearantrieb) oder mittels einer blockier- bzw. sperrbaren Gewindeverbindung drehfest miteinander gekoppelt sind.

In möglicher Weiterbildung weist das die Drehkopfeinheit aufweisende Drehkopfwerkzeug eine elektronische Steuereinrichtung und eine Sensorik auf. Die elektronische Steuereinrichtung kann beispielsweise als Teil oder Modul einer Robotersteuerung des Robotersystems ausgebildet sein, an dessen Endeffektor das Drehkopfwerkzeug montiert ist. Die Sensorik ist dazu konfiguriert, eine rotatorische und/oder translatorische Abweichung der Abtriebskörperlängsmittenachse und damit des Effektorpunkts des drehfest mit dem Abtriebskörper verbundenen Drehwerkzeugeffektors in Bezug zur Drehkopfhauptachse bzw. Antriebskörperlängsmittenachse zu erfassen. Mit anderen Worten und in Bezug zu einem Drehkopfkoordinatensystem ist die Sensorik dazu eingerichtet, zu erfassen, ob bzw. wie weit die Abtriebskörperlängsmittenachse bzw. der Effektorpunkt in der X-Dimension und in der Y-Dimension aus der Drehkopfhauptachse ausgeschwenkt und verschoben wird. Die Sensorik ist weiter dazu eingerichtet, diese Abweichung, das heißt ein die Abweichung charakterisierendes Sensorsignal, der Steuereinrichtung zuzustellen. Hierzu umfasst die Sensorik zum Beispiel an/in einem Gehäuse des Drehkopfwerkzeugs, in dem die Drehkopfeinheit rotierbar gelagert ist, einen Abstandssensorsatz mit einem ersten Abstandssensor zum Ermitteln einer Position der Abtriebskörperlängsmittenachse in Bezug auf eine erste Raumrichtung (zum Beispiel die X-Richtung) sowie mit einem zweiten Abstandssensor zum Ermitteln einer Position der Abtriebskörperlängsmittenachse in Bezug auf eine zweite Raumrichtung (zum Beispiel die Y-Richtung). Die Sensorik weist einen zweiten Abstandssensorsatz auf, wobei die Abstandssensorsätze entlang der Drehkopfhauptachse über einen Sensorebenenversatz voneinander beabstandet sind. Der zweite Abstandssensorsatz weist einen zweiten Abstandssensor zum Ermitteln einer Position der Abtriebskörperlängsmittenachse in Bezug auf die erste Raumrichtung sowie mit einem zweiten Abstandssensor zum Ermitteln einer Position der Abtriebskörperlängsmittenachse in Bezug auf die zweite Raumrichtung auf. Der jeweilige Abstandssensor kann als ein mechanischer, optischer, magnetischer, elektrischer oder akustischer Abstandssensor ausgeführt sein. Weiter ist die Steuereinrichtung dazu konfiguriert, bei einer erfassten Abweichung der Abtriebskörperlängsmittenachse in Bezug zur Drehkopfhauptachse - also in Reaktion auf eine solche Abweichung - den Antriebskörper räumlich so zu verstellen, dass die Drehkopfhauptachse bzw. Antriebskörperlängsmittenachse und die Abtriebskörperlängsmittenachse (wieder) zusammenfallen, wodurch der Effektorpunkt auf die Drehkopfhauptachse der Drehkopfeinheit bewegt wird. Mit anderen Worten wird die Drehkopfeinheit also (wieder) in deren Geradstellung angeordnet. Die Steuereinrichtung veranlasst hierzu beispielsweise eine entsprechende Veränderung einer Pose der Roboterkinematik des Roboters.

In möglicher Weiterbildung ergibt sich für das Verfahren somit, dass mittels der Sensorik des Drehkopfwerkzeugs die rotatorische und/oder translatorische Abweichung der Abtriebskörperlängsmittenachse von der Drehkopfhauptachse erfasst und der Steuereinrichtung bereitgestellt wird. Basierend auf dieser Abweichung wird das Drehkopfwerkzeug mittels der Steuereinrichtung derart gesteuert, dass - wenn die Abtriebskörperlängsmittenachse und die Drehkopfhauptachse rotatorisch und/oder translatorisch voneinander abweichen - der Abtriebskörper räumlich bewegt wird, derart, dass die Abtriebskörperlängsmittenachse bzw. der Effektorpunkt und die Drehkopfhauptachse zusammenfallen. So ist eine Maßnahme geschaffen, mittels derer ein - aufgrund der in Reihe geschalteten homokinetischen Gelenke geschwindigkeitskonstantes - Drehen des Abtriebskörpers und infolgedessen des an diesem drehfest befestigten Drehwerkzeugeffektors gewährleistet ist. Es ist zudem denkbar, die ermittelte Abweichung der Abtriebskörperlängsmittenachse von der Drehkopfhauptachse eines aktuellen Drehwerkzeugeinsatzes, zum Beispiel Schraub- oder Bohrprozesses etc., für einen nachfolgenden Drehwerkzeugeinsatz von vornherein zu berücksichtigen. Dadurch kann in eine Sollkoordinate für den nachfolgenden Drehwerkzeugeinsatz die Abweichung aus dem vorangegangenen Drehwerkzeugeinsatz eingerechnet werden, um ein Verrücken und/oder Verschwenken des Abtriebskörpers aus dessen zentraler Mittenposition bzw. aus der Drehkopfhauptachse zu minimieren. So kann ein Nachregeln der Roboterkinematik und für den nachfolgenden Drehwerkzeugeinsatz minimiert werden.

Gemäß der Erfindung wird des Weiteren ein Zentrierschraubelement vorgeschlagen, das besonders vorteilhaft im Zusammenspiel mit dem Verfahren zum Herstellen einer Schraubverbindung einsetzbar ist. Das bedeutet, dass das Verfahren, bei dem das Zentrierschraubelement eingesetzt wird, eine Schraubprozess aufweist. Das Zentrierschraubelement weist entlang seiner Schraubelementlängsmittenachse einen kegligen oder kugelkalottenförmigen Einführzentrierabschnitt sowie einen Gewindeabschnitt auf. Der Gewindeabschnitt schließt sich direkt an den Einführzentrierabschnitt an. Alternativ weist das Zentrierschraubelement einen ebenfalls entlang der Schraubelementlängsmittenachse koaxial angeordneten Zentrierzylinderabschnitt auf, über welchen der Gewindeabschnitt an den Einführzentrierabschnitt angeschlossen ist.

Das Zentrierschraubelement ist insbesondere als ein Innengewindeelement ausgebildet, zum Beispiel als eine Schraubmutter, als eine Clinchmutter, als eine Nietmutter, als eine Schweißmutter, als eine Innengewindehülse etc. ausgebildet. In das Innengewindeelement kann mittels des Drehkopfwerkzeugs ein korrespondierender Außengewindebolzen eingeschraubt werden. Das bedeutet, der Einführzentrierabschnitt ist konkav hohlkeglig oder konkav hohlkugelkalottenförmig. Der Gewindeabschnitt ist dann als Innengewindeabschnitt ausgebildet, und der Zentrierzylinderabschnitt ist als ein Hohlzylinder ausgeführt. Dieser weist einen Innendurchmesser auf, der einem Außendurchmesser des Außengewindebolzens entspricht, sodass der Außengewindebolzen mittels des Drehkopfwerkzeugs radial formschlüssig aber axial bewegbar in den Innengewindeabschnitt des Zentrierschraubelements eingesetzt werden kann, ohne dass zwischen dem Innengewindeabschnitt und dem Zentrierzylinderabschnitt eine Gewindeverbindung vermittelt wird. Insbesondere ist der Innendurchmesser des Zentrierzylinderabschnitts ein Kerndurchmesser des Innengewindeabschnitts des Zentrierschraubelements. Der Effektorpunkt wird in diesem Fall als die Spitze des mit dem Drehwerkzeugeffektor gekoppelten Halbzeugs definiert, wobei das Halbzeug der in das Innengewindeelement einzuschraubende Außengewindebolzen, insbesondere einer Schraube, ist. Das Zentrierschraubelement bzw. Innengewindeelement ist insbesondere vor dem Schraubprozess drehfest angeordnet, zum Beispiel an die Öffnung des Werkstücks angeschweißt bzw. in eine Hülsenöffnung des zu verschraubenden Werkstücks eingezogen. Es kann ferner vorgesehen sein, dass das das Innengewindeelement und das Werkstück einstückig miteinander ausgebildet sind. So schließt sich das Innengewindeelement an die Öffnung des Werkstücks an oder bildet die Öffnung ganz oder teilweise. Es ist ferner denkbar, dass das Zentrierschraubelement bzw. Innengewindeelement als zunächst lose Schraubmutter ausgebildet ist, die mittels des Drehkopfinierkzeugs auf einen korrespondierenden Außengewindebolzen, beispielsweise Stehbolzen, aufgeschraubt wird.

In alternativer Ausführung ist das Zentrierschraubelement als ein Außengewindebolzen, insbesondere einer Schraube, ausgebildet, der in ein korrespondierendes Innengewindeloch oder eine korrespondierende Innengewindehülse eingeschraubt werden kann. Dann ist der Einführzentrierabschnitt durch einen konvexe Kegeloberfläche oder eine konvexe Kugelkalottenoberfläche gebildet. Der Gewindeabschnitt ist dann als Außengewindeabschnitt ausgebildet, und der Zentrierzylinderabschnitt ist als ein Zylinderkörper ausgeführt. Dieser weist einen Außendurchmesser auf, der einem Innendurchmesser des Innengewindelochs bzw. der Innengewindehülse entspricht, insbesondere ist der Außendurchmesser des Zentrierzylinderabschnitts der Kerndurchmesser des Zentrierschraubelements. Dadurch kann das Zentrierschraubelement radial formschlüssig aber axial bewegbar in das Innengewindeloch bzw. in die Innengewindehülse eingesetzt werden, ohne dass zwischen dem Außengewindeabschnitt und dem Innengewindeloch bzw. der Innengewindehülse eine Gewindeverbindung vermittelt wird. Der Effektorpunkt wird in so einem Fall als die Spitze des mit dem Drehwerkzeugeffektor gekoppelten Halbzeugs definiert, wobei das Halbzeug das als der Außengewindebolzen ausgebildete Zentrierschraubelement ist. Als Spitze des Zentrierschraubelements wird eine Kegelspitze des kegligen Einführzentrierabschnitts bzw. ein Schnittpunkt der Schraubelementlängsmittenachse mit der Kugelkalottenoberfläche angesehen. Je nach Größe, insbesondere Durchmesser, des Außengewindebolzens kann dieser - um einen Massevorteil zu erzielen - innen hohl ausgeführt sein, zum Beispiel mittels einer mittigen Hohlbohrung entlang der Schraubelementlängsmittenachse.

Das Zentrierschraubelement ist insofern vorteilhaft, als es das Abgleiten des Effektorpunkts an der Öffnung des Werkstücks als Ergänzung zu den im Zusammenhang mit der Drehkopfeinheit bzw. dem Drehkopfwerkzeug beschriebenen Maßnahmen unterstützt. Zudem erleichtert der sich keglig oder kuglig hin zur Schraubelementlängsmittenachse verjüngende Einführzentrierabschnitt einen Gewindesuchvorgang, insbesondere bei einem automatisierten Schraubprozess.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in derjeweils angegebenen Kombination, sondern auch in anderen Kombinationen oder in Alleinstellung verwendbar, ohne den Rahmen der Erfindung zu verlassen.

Die Zeichnung zeigt in
- Fig. 1: eine entlang einer Schnittebene I-I (siehe Fig. 3) geschnittene Ansicht einer Drehkopfeinheit eines Drehkopfwerkzeugs, wobei zwei Gelenke der Drehkopfeinheit gemäß einer ersten Variante ausgebildet sind,
- Fig. 2: eine entlang der Schnittebene I-I geschnittene Ansicht eines Abtriebskörpers der Drehkopfeinheit,
- Fig. 3: eine entlang einer Schnittebene III-III (siehe Fig. 1 und Fig. 2) geschnittene Ansicht der Drehkopfeinheit,
- Fig. 4: eine entlang einer Schnittebene IV-IV (siehe Fig. 3) geschnittene Ansicht der Drehkopfeinheit, deren Gelenke gemäß einer zweiten Variante ausgebildet sind,
- Fig. 5: eine entlang der Schnittebene IV-IV geschnittene Ansicht des Abtriebskörpers der der Drehkopfeinheit,
- Fig. 6: eine entlang einer Schnittebene VI-VI (siehe Fig. 7) geschnittene Ansicht der Drehkopfeinheit, deren Gelenke gemäß einer dritten Variante ausgebildet sind,
- Fig. 7: eine entlang einer Schnittebene VII-VII (siehe Fig. 6) geschnittene Ansicht der Drehkopfeinheit,
- Fig. 8: eine entlang einer Schnittebene VIII-VIII (siehe Fig. 9) geschnittene Ansicht einer weitere möglichen Ausführungsform des Abtriebskörpers der Drehkopfeinheit,
- Fig. 9: eine Draufsicht auf den in Fig. 8 dargestellten Abtriebskörper, wobei ein Oberteil des Abtriebskörpers nicht bzw. transparent dargestellt ist,
- Fig. 10: eine entlang der Schnittebene I-I geschnittene Ansicht der Drehkopfeinheit, die aus einer Geradstellung ausgelenkt ist,
- Fig. 11: eine entlang der Schnittebene I-I geschnittene Ansicht der Drehkopfeinheit, die ein Abstandwellenelement aufweist,
- Fig. 12: eine entlang der Schnittebene I-I geschnittene Ansicht des die Drehkopfeinheit aufweisenden Drehkopfwerkzeugs,
- Fig. 13: eine schematische Ansicht eines Robotersystems, dessen Gelenkarmroboter das Drehkopfwerkzeug trägt, beim Ausführen eines Schraubprozesses,
- Fig. 14: eine schematische Ansicht einer stationären Schraubstation, die das Drehkopfwerkzeug aufweist, beim Ausführen eines Schraubprozesses,
- Fig. 15-Fig. 19: zur Verdeutlichung eines Verfahrens, bei dem mittels des Drehkopfinierkzeugs an einer Öffnung eines Werkstücks ein Bearbeitungsvorgang ausgeführt wird, das Drehkopfwerkzeug, das zum Verschrauben zweier Werkstücke eingesetzt wird,
- Fig. 20: eine schematische und ausgebrochene Ansicht eines als Schraubbolzen ausgebildeten Zentrierschraubelements,
- Fig. 21: eine schematische und geschnittene Ansicht eines als Schraubmutter ausgebildeten Zentrierschraubelements, in das ein korrespondierender Schraubbolzen eingeschraubt wird, und
- Fig. 22: eine schematische und geschnittene Ansicht des als Schraubmutter ausgebildeten Zentrierschraubelements in weiterer Ausgestaltung.

Im Folgenden werden eine Drehkopfeinheit 1 für ein Drehkopfwerkzeug 2 sowie das Drehkopfwerkzeug 2 an sich und ein Verfahren, bei dem mittels des Drehkopfwerkzeugs 2 an einer Öffnung eines Werkstücks ein Bearbeitungsvorgang ausgeführt wird, sowie ein beim Verfahren eingesetztes Zentrierschraubelement 3 in gemeinsamer Beschreibung erläutert. Dabei sind gleiche oder funktionsgleiche Elemente in den Figuren mit gleichem Bezugszeichen versehen. Zur einfachen Orientierung wird in der folgenden Beschreibung auf ein Koordinatensystem bezuggenommen, das in den Fig. eingezeichnet ist.

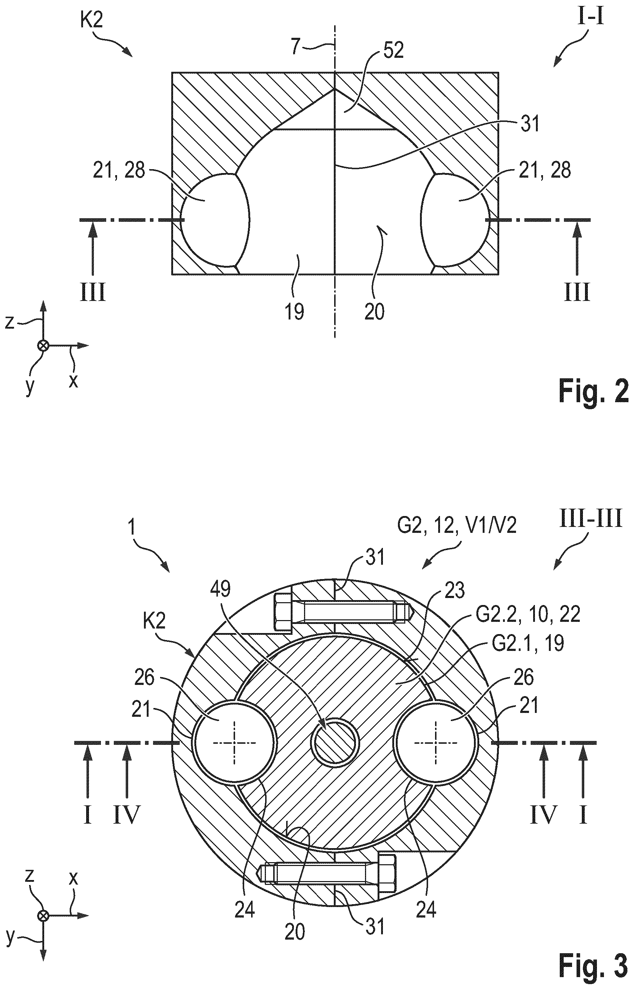

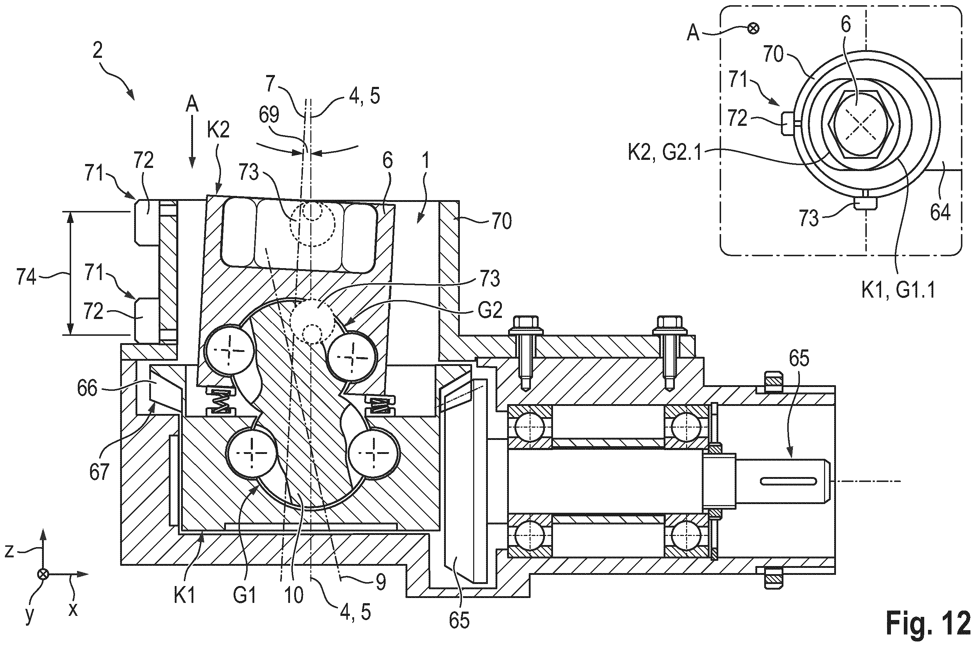

Fig. 1 zeigt eine entlang einer Schnittebene I-I (siehe Fig. 3) geschnittene Ansicht der Drehkopfeinheit 1 des Drehkopfwerkzeugs 2 (erstmals in Fig. 12 dargestellt). Die Drehkopfeinheit 1 weist einen Antriebskörper K1 auf, durch dessen Antriebskörperlängsmittenachse 4 eine Drehkopfhauptachse 5 der Drehkopfeinheit 1 definiert ist. Des Weiteren weist die Drehkopfeinheit 1 einen separat vom Antriebskörper K1 ausgebildeten Abtriebskörper K2 auf, der mit einem Drehwerkzeugeffektor 6 drehfest verbunden ist, wobei eine Abtriebskörperlängsmittenachse 7 des Abtriebskörper K2 und ein Effektorpunkt 8 des Drehwerkzeugeffektors 6 zusammenfallen. Der Drehwerkzeugeffektor 6 ist hier im Beispiel als eine Schraubnuss ausgebildet, wobei es sich bei dem Effektorpunkt 8 um einen Mittelpunkt der Schraubnuss handelt. Ein antriebsseitiges Gleichlaufgelenk bzw. antriebsseitiges homokinetisches Gelenk G1 der Drehkopfeinheit 1 weist ein erstes antriebsseitiges Gelenkelement G1.1 sowie ein zweites antriebsseitiges Gelenkelement G1.2 auf. Dabei ist das erste antriebsseitige Gelenkelement G1.1 drehfest am Antriebskörper K1 ausgebildet; im vorliegenden Beispiel sind der Antriebskörper K1 und das erste antriebsseitige Gelenkelement G1.1 stoffschlüssig miteinander verbunden, indem sie einstückig miteinander ausgebildet sind. Die antriebsseitigen Gelenkelemente G1.1, G1.2 sind gelenkig miteinander verbunden. Ein abtriebsseitiges Gleichlaufgelenk bzw. abtriebsseitiges homokinetisches Gelenk G2 der Drehkopfeinheit 1 weist ein erstes abtriebsseitiges Gelenkelement G2.1 sowie ein zweites abtriebsseitiges Gelenkelement G2.2 auf. Dabei ist das erste abtriebsseitige Gelenkelement G2.1 drehfest am Abtriebskörper K2 ausgebildet; vorliegend sind der Abtriebskörper K2 und das erste abtriebsseitige Gelenkelement G2.1 stoffschlüssig miteinander verbunden, indem sie einstückig miteinander ausgebildet sind. Die abtriebsseitigen Gelenkelemente G2.1, G2.2 sind gelenkig miteinander verbunden. Die zweiten Gelenkelemente G1.2, G2.2 sind entlang einer gemeinsamen geraden Kopplungskörperlängsmittenachse 9 fest miteinander zu einem Gelenkkopplungskörper 10 verbunden, vorliegen einstückig miteinander ausgebildet. Es ist in Fig. 1 zu erkennen, dass die Abtriebskörperlängsmittenachse 7, die Kopplungskörperlängsmittenachse 9 und die Drehkopfhauptachse 5 bzw. Antriebskörperlängsmittenachse 4 zusammenfallen, was bedeutet, dass die Drehkopfeinheit 1 in ihrer Geradstellung abgebildet ist. Die Drehkopfeinheit ist aufgrund der Gelenke G1, G2 aus der Geradstellung auslenkbar, wie weiter unten noch genauer beschrieben wird.

Gemäß dem vorliegenden Beispiel ist das antriebsseitige Gelenk G1 als ein antriebsseitiges Kugelgelenk 11 ausgebildet, wobei das abtriebsseitige Gelenk G2 als ein abtriebsseitiges Kugelgelenk 12 ausgebildet ist. Bei den Kugelgelenken 11, 12 handelt es sich um ein jeweiliges homokinetisches Kugelgelenk. Gemäß dem vorliegend beschriebenen Beispiel weist das erste antriebsseitige Gelenkelement G1.1 eine antriebsseitige Kugelgelenkpfanne 13 auf, an deren antriebsseitiger Kugelinnenfläche 14 eine antriebs- und gelenkpfannenseitige Übertragungskugelhalterung 15 ausgebildet ist. Das zweite antriebsseitige Gelenkelement G1.2 weist einen antriebsseitigen Gelenkkugelkopf 16 auf, an dessen antriebsseitiger Kugelaußenfläche 17 eine antriebs- und kugelkopfseitige Übertragungskugelhalterung 18 ausgebildet ist. Das antriebsseitige Gelenk G1 und das Abtriebsseitige Gelenk G2 sind vorliegend spiegelbildlich ausgeführt. Daher weist das erste abtriebsseitige Gelenkelement G2.1 eine abtriebsseitige Kugelgelenkpfanne 19 auf, an deren abtriebsseitiger Kugelinnenfläche 20 eine abtriebs- und gelenkpfannenseitige Übertragungskugelhalterung 21 ausgebildet ist. Ferner weist das zweite abtriebsseitige Gelenkelement G2.2 einen abtriebsseitigen Gelenkkugelkopf 22 auf, an dessen abtriebsseitiger Kugelaußenfläche 23 eine abtriebs- und kugelkopfseitige Übertragungskugelhalterung 24 ausgebildet ist. Zudem weist das antriebsseitige Gelenk G1 eine antriebsseitige Übertragungskugel 25 auf, wohingegen das abtriebsseitige Gelenk G2 eine abtriebsseitige Übertragungskugel 26 aufweist. Der antriebsseitige Gelenkkugelkopf 16 ist in der antriebsseitigen Kugelgelenkpfanne 13 gelenkig gelagert, wobei die antriebsseitige Übertragungskugel 25 zwischen der antriebsseitigen Kugelgelenkpfanne 13 und dem antriebsseitigen Gelenkkugelkopf 16 angeordnet ist, indem die antriebsseitige Übertragungskugel 25 in den antriebsseitigen Übertragungskugelhalterungen 15, 18 gelagert ist. Dahingegen ist der abtriebsseitige Gelenckugelkopf 22 in der abtriebsseitigen Kugelgelenkpfanne 19 gelenkig gelagert, wobei die abtriebsseitige Übertragungskugel 26 zwischen der abtriebsseitigen Kugelgelenkpfanne 19 und dem abtriebsseitigen Gelenkkugelkopf 22 angeordnet ist, indem die abtriebsseitige Übertragungskugel 26 in den abtriebsseitigen Übertragungskugelhalterungen 21, 24 gelagert ist.

Fig. 1 zeigt die Drehkopfeinheit 1, deren Gelenke G1, G2 jeweils gemäß einer ersten Variante V1 ausgebildet sind. Die gelenkpfannenseitige Übertragungskugelhalterung 15, 21 des jeweiligen Gelenks G1, G2 weist eine mit der zugehörigen Übertragungskugel 25, 26 geometrisch korrespondierende Hohlkugelkalotte 27, 28 auf, wobei die kugelkopfseitige Übertragungskugelhalterung 18, 24 eine mit der zugehörigen Übertragungskugel 25, 26 geometrisch korrespondierende Kugelrinne 29, 30 aufweist, die sich parallel zur Längsmittenachse des Gelenkkugelkopfs 16, 22 - also parallel zur Kopplungskörperlängsmittenachse 9 - sowie entlang eines Großkreises des Gelenkkugelkopfs 16, 22 erstreckt. Die entsprechende Übertragungskugel 25, 26 sitzt zum einen in der gelenkpfannenseitigen Hohlkugelkalotte 27, 28, und zum anderen greift die in der Hohlkugelkalotte 27, 28 sitzende Übertragungskugel 25, 26 in die kugelkopfseitige Kugelrinne 29, 30 ein. Gemäß Variante V1 sind je Gelenk G1, G2 maximal zwei antriebsseitige Übertragungskugeln 25 vorgesehen, die im Abstand von 180° um die Antriebskörperlängsmittenachse 4 angeordnet sind. Zudem weist das jeweilige Gelenk G1, G2, das nach Variante 1 ausgeführt ist, maximal zwei Übertragungskugeln 25, 26 auf, die im Abstand von 180° um die Abtriebskörperlängsmittenachse 7 angeordnet sind. Fig. 2 zeigt eine entlang der Schnittebene I-I geschnittene Ansicht des Abtriebskörpers K2 der Drehkopfeinheit 1, wobei zu verstehen ist, dass der Antriebskörper K1 hier im Beispiel spiegelgleich ausgebildet ist. Fig. 3 zeigt eine entlang einer Schnittebene III-III (siehe Fig. 1 und Fig. 2) geschnittene Ansicht der Drehkopfeinheit 1, wobei zu erkennen ist, dass der Antriebskörper K1 und der Abtriebskörper K2 und infolgedessen die Kugelgelenkpfannen 13, 19 zweiteilig ausgebildet sind, damit der jeweilige Gelenkkugelkopf 16, 22 entsprechend montiert werden kann. Dementsprechend ist in den Fig. 1 bis Fig. 7 eine Trennfuge 31 zu erkennen, an der Teilkörper des Antriebskörpers K1 bzw. des Abtriebskörpers K2 aneinander angrenzen. Bevorzugterweise sind die Teilkörper Gleichteile.

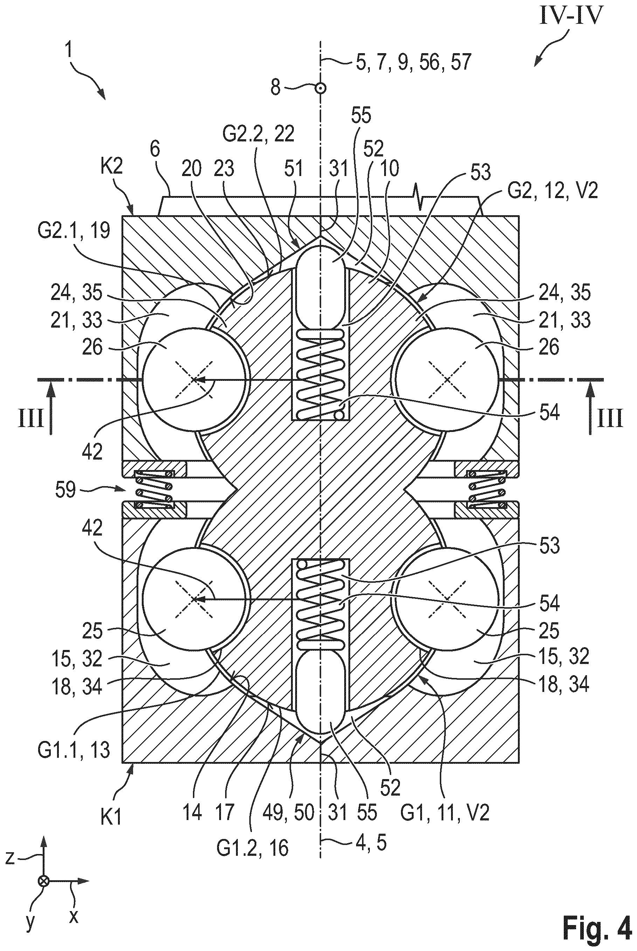

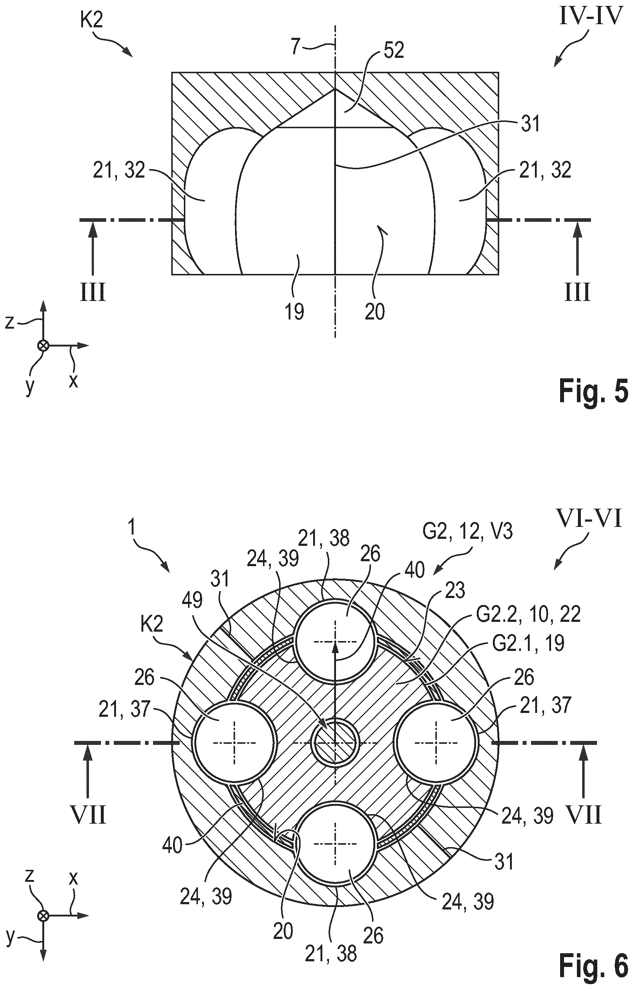

Fig. 4 zeigt eine entlang einer Schnittebene IV-IV (siehe Fig. 3) geschnittene Ansicht der Drehkopfeinheit, deren Gelenke gemäß einer zweiten Variante V2 ausgebildet sind. Da die Schnittdarstellung sich bei einem Gelenk G1, G2 der ersten Variante V1 und bei einem Gelenk G1, G2 der zweiten Variante V2 nicht unterscheidet, wird erneut auf Fig. 3 bezuggenommen. Gemäß Variante V2 weist die gelenkpfannenseitige Übertragungskugelhalterung 15, 21 eine mit der zugehörigen Übertragungskugel 25, 26 geometrisch korrespondierende Kugelrinne 32, 33 auf, die sich parallel zur Längsmittenachse der Kugelgelenkpfanne 13, 19 - also parallel zur An- bzw. Abtriebskörperlängsmittenachse 4, 7 - sowie entlang eines Großkreises der Kugelgelenkpfanne 13, 19 erstreckt. Dabei weist die kugelkopfseitige Übertragungskugelhalterung 18, 24 eine mit der zugehörigen Übertragungskugel 25, 26 geometrisch korrespondierende Hohlkugelkalotte 34, 35 auf. Die entsprechende Übertragungskugel 25, 26 sitzt zum einen in der kugelkopfseitigen Hohlkugelkalotte 34, 35, und zum anderen greift die in der Hohlkugelkalotte 34, 35 sitzende Übertragungskugel 25, 26 in die gelenkpfannenseitige Kugelrinne 32, 33 ein. Gemäß Variante V2 sind je Gelenk G1, G2 maximal zwei antriebsseitige Übertragungskugeln 25 vorgesehen, die im Abstand von 180° um die Kopplungskörperlängsmittenachse 9 angeordnet sind. Ferner weist das jeweilige Gelenk G1, G2, das nach Variante 2 ausgeführt ist, maximal zwei abtriebsseitige Übertragungskugeln 26 auf, die im Abstand von 180° um eine Längsmittenachse des Gelenkkugelkopfs 16, 22 bzw. um die Kopplungskörperlängsmittenachse 9 angeordnet sind. Fig. 5 zeigt eine entlang der Schnittebene IV-IV geschnittene Ansicht des Abtriebskörpers K2 der Drehkopfeinheit 1, wobei zu verstehen ist, dass der Antriebskörper K1 hier im Beispiel spiegelgleich ausgebildet ist.

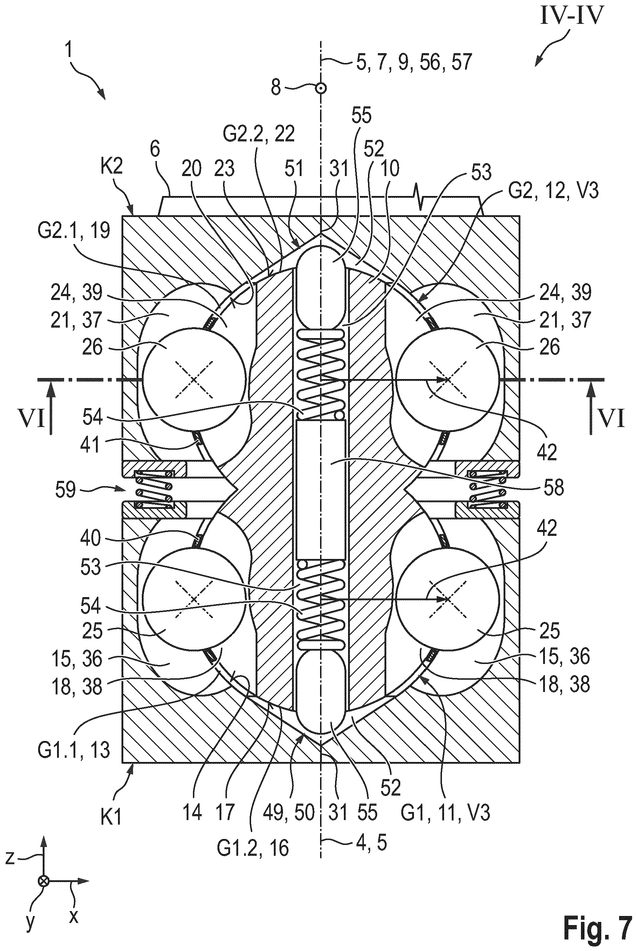

Fig. 6 zeigt eine entlang einer Schnittebene VI-VI (siehe Fig. 7) geschnittene Ansicht der Drehkopfeinheit 1, deren Gelenke G1, G2 gemäß einer dritten Variante V3 ausgebildet sind. Hierbei weist die gelenkpfannenseitige Übertragungskugelhalterung 15, 21 jeweils eine mit der zugehörigen Übertragungskugel 25, 26 geometrisch korrespondierende gelenkpfannenseitige Kugelrinne 36, 37 auf, die sich parallel zur Längsmittenachse der Kugelgelenkpfanne 13, 19 - also parallel zur An- bzw. Abtriebskörperlängsmittenachse 4, 7 - sowie entlang eines Großkreises der Kugelgelenkpfanne 13, 19 erstreckt. Darüber hinaus weist kugelkopfseitige Übertragungskugelhalterung 18, 24 jeweils eine mit der zugehörigen Übertragungskugel 25, 26 geometrisch korrespondierende kugelkopfseitige Kugelrinne 38, 39 auf, die sich parallel zur Längsmittenachse des Gelenkkugelkopfs 16, 22 - also parallel zur Kopplungskörperlängsmittenachse 9 - sowie entlang eines Großkreises des Gelenkkugelkopfs 16, 22 erstreckt. Zudem weist das Variante-3-Gelenk G1, G2 einen Übertragungskugelkäfig 40, 41 auf, wobei mittels des antriebsseitigen Übertragungskugelkäfigs 40 die antriebsseitige Übertragungskugel 25 und mittels des abtriebsseitigen Übertragungskugelkäfigs 41 die abtriebsseitige Übertragungskugel 26 in den zugehörigen Kugelrinnen 36, 38 bzw. 37, 39 gehalten wird, sodass die im Übertragungskugelkäfig 40, 41 sitzende Übertragungskugel 25, 26 zum einen in die gelenkpfannenseitige Kugelrinne 36, 37 und zum anderen in die kugelkopfseitige Kugelrinne 38, 39 eingreift. Der Übertragungskugelkäfig 40, 41 ist zwischen der Kugelgelenkpfanne 13, 19 und dem Gelenkkugelkopf 16, 22 angeordnet. Wie aus Fig. 6 hervorgeht, kann das Variante-3-Gelenk zwei oder mehr Übertragungskugeln 25, 26 aufweisen. Dementsprechend weist das Gelenk G1, G2 der Drehkopfeinheit 1, das gemäß Variante V3 ausgebildet ist, je Übertragungskugel 25, 26 eine gelenkpfannenseitige Kugelrinne 36, 37 und eine kugelkopfseitige Kugelrinne 38, 39 auf. Die Drehkopfeinheit 1, die zwei Variante-3-Gelenke G1, G2 aufweist, ist in Fig. 7 in einer entlang einer Schnittebene VII-VII (siehe Fig. 6) geschnittenen Ansicht dargestellt.

Vorzugsweise sind beide Gelenke G1, G2 gemäß einer gemeinsamen Variante V1, V2, V3 ausgebildet, wie aus den Fig. 1-7 hervorgeht. Dabei weisen die Gelenke G1, G2 vorliegend gleich viele Übertragungskugeln 25, 26 auf. In der Geradstellung der Drehkopfeinheit 1 sind die antriebsseitigen Übertragungskugeln 25 und die abtriebsseitigen Übertragungskugeln 26 um einen gemeinsamen radialen Übertragungskugelabstand 42 senkrecht von der Kopplungskörperlängsmittenachse 9 beabstandet. Dabei sind jeweils eine der antriebsseitigen Übertragungskugeln 25 und jeweils eine der abtriebsseitigen Übertragungskugeln 26 entlang einer parallel zur Kopplungskörperlängsmittenachse 9 verlaufenden (imaginären) Gerade, die durch die Kugelmittelpunkte der besagten Übertragungskugeln 25, 26 verläuft, angeordnet. Ausführungsformen, bei denen eines der Gelenke G1, G2 gemäß einer anderen Variante V1, V2, V3 als das andere der Gelenke G1, G2 ausgebildet ist und/oder eines der Gelenke G1, G2 mehr Übertragungskugeln 25, 26 als das andere der Gelenke G1, G2 aufweist, sind ebenso denkbar. Es ist zu verstehen, dass der Vortrag zu den Varianten V1, V2, V3 lediglich auf die Gelenke G1, G2 bezogen ist, aber in den Fig. dargestellte weitere Elemente der Drehkopfeinheit 1 nicht auf die in der entsprechenden Fig. gezeigte Variante beschränkt ist. So können beispielsweise die weiter unten noch beschriebenen Elemente Geradstelleinrichtung 49, Kippwinkelbegrenzungsring 59, Abstandswellenelement 63, Antriebseinrichtung 67 etc. beliebig mit den Varianten V1, V2, V3 kombiniert werden, selbst wenn dies in den Fig. nicht explizit dargestellt ist.

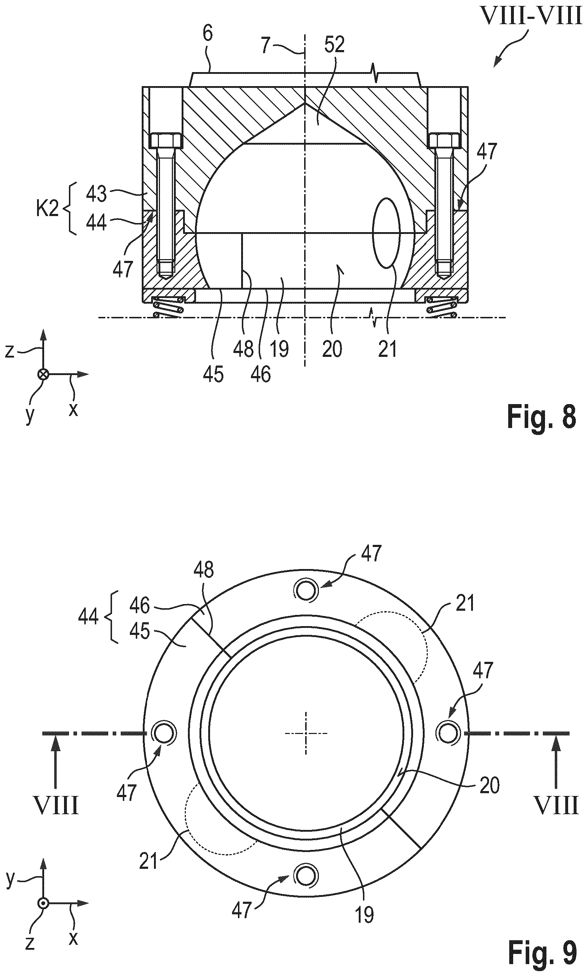

Fig. 8 zeigt eine entlang einer Schnittebene VIII-VIII (siehe Fig. 9) geschnittene Ansicht einer weitere möglichen Ausführungsform des Abtriebskörpers K2 der Drehkopfeinheit 1, wobei in Fig. 9 eine Draufsicht auf den in Fig. 8 dargestellten Abtriebskörper K2 dargestellt ist, wobei ein Oberteil 43 des Abtriebskörpers K2 nicht bzw. transparent dargestellt ist. Es ist zu erkennen, dass der Abtriebskörper K2 anstelle der Trennfuge 31 anderweitig mehrteilig aufgebaut ist, vorliegend den Oberteil 43 und einen mit dem Oberteil 43 verbundenen Haltering 44 aufweist. Um den Gelenkkugelkopf 22 hinterschnittig montieren bzw. in der zugehörigen Kugelgelenkpfanne 13, 19 positionell sichern zu können (vgl. Fig. 1, Fig. 4, Fig. 7), ist der Haltering 44 hier aus zwei Ringteilen 45, 46 gebildet, bei denen es sich insbesondere um Gleichteile handelt. Dies gilt analog für den Antriebskörper K1, der beispielsweise spiegelbildlich zum Abtriebskörper K2 ausgebildet ist. Die beiden Ringteile 45, 46 sind zum Beispiel mittels einer jeweiligen Schraubverbindung 47 an den Oberteil 43 angeschraubt und dadurch aneinandergespannt. Es ist weiter in Fig. 8 und in Fig. 9 zu erkennen, dass eine Trennfuge 48, über welche die Ringteile 45, 46 aneinander angrenzen, weder eine der Schraubverbindung 47 noch eine der gelenkpfannenseitigen Übertragungskugelhalterungen 21 berührt oder schneidet.

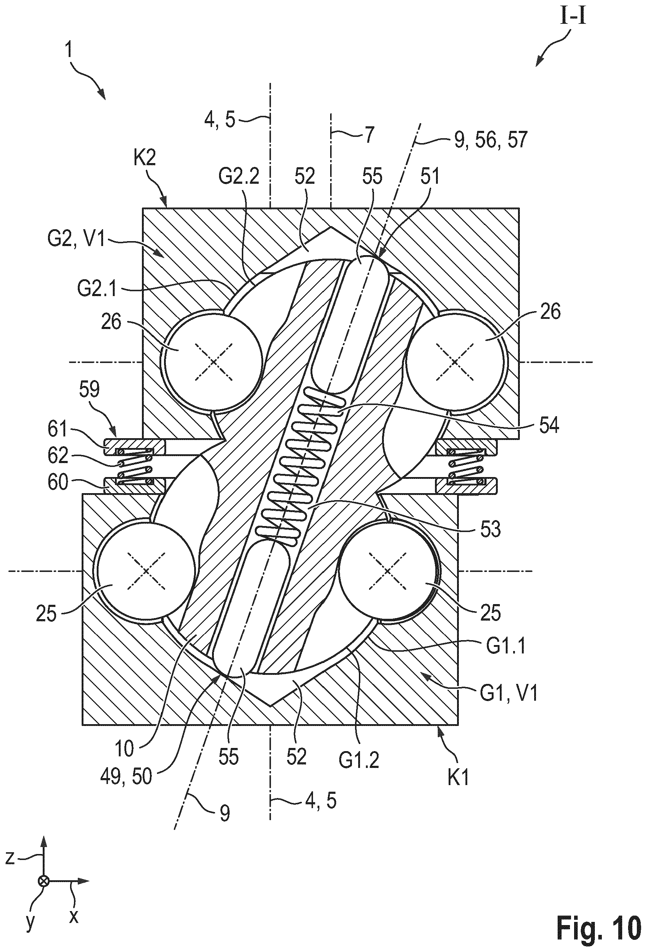

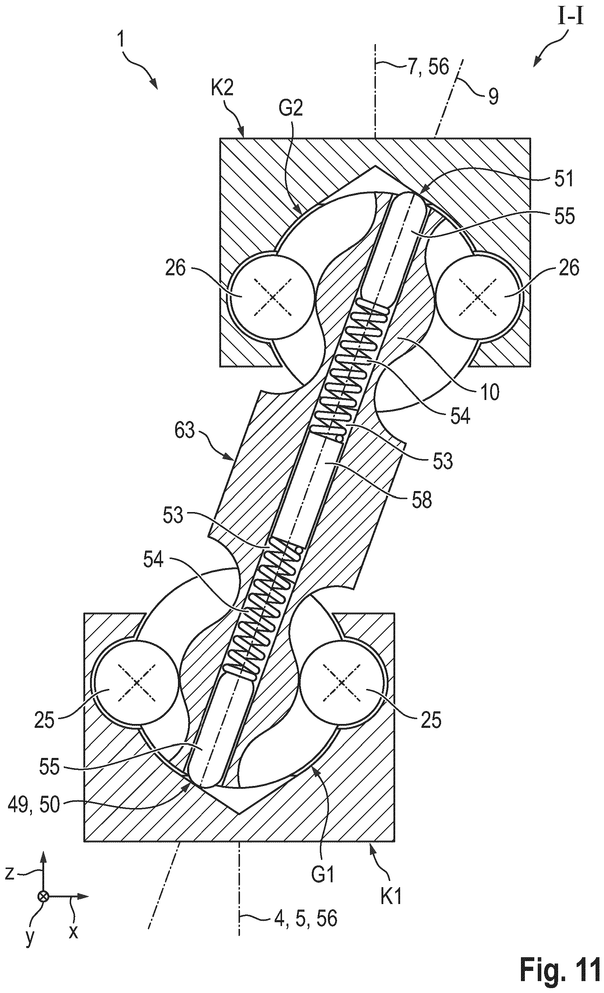

Fig. 10 zeigt eine entlang der Schnittebene I-I geschnittene Ansicht der Drehkopfeinheit 1, die aus der Geradstellung ausgelenkt ist. Es ist zu erkennen, dass die die Antriebskörperlängsmittenachse 4 bzw. Drehkopfhauptachse 5, die Abtriebskörperlängsmittenachse 7 und die Kopplungskörperlängsmittenachse 9 einer von der Geradstellung abweichenden Stellung auseinanderfallen, da dann der Abtriebskörper K2 in Bezug zum Antriebskörper K1 verschoben und/oder verschwenkt ist. Es ist weiter aus Fig. 10 zu erkennen, dass die Drehkopfeinheit 1 hier im Beispiel eine gelenkinterne Geradstelleinrichtung 49 aufweist, die in ihrem gespannten Zustand (Fig. 10, Fig. 11) die Gelenkelemente G1.1, G1.2, G2.1, G2.2 bzw. die Körper K1, K2, 10 in Richtung hin zur Geradstellung (Fig. 1, Fig. 4, Fig. 7) treibt. In ihrem entspannten Zustand hält die Geradstelleinrichtung 49 die Gelenkelemente G1.1, G1.2, G2.1, G2.2 bzw. die Körper K1, K2, 10 in der Geradstellung der Drehkopfeinheit 1. Die Geradstelleinrichtung 49 weist je Gelenk G1, G2 eine Geradstelleinheit 50, 51 auf. Vorliegend weist jeweilige Geradstelleinheit 50, 51 eine konkave keglige Geradstellelementaufnahme 52 auf, die an dem jeweiligen ersten Gelenkelement G1.1, G2.1 ausgebildet ist. Zudem umfasst die jeweilige Geradstelleinheit 50, 51 eine am jeweiligen zweiten Gelenkelement G1.2, G2.2 ausgebildete Federelementaufnahme 53 auf, in welcher ein Federelement 54 angeordnet ist, das ein Geradstellelement 55 der Geradstelleinrichtung 49 hin zur Geradstellelementaufnahme 52 spannt. Eine Längsmittenachse 56 der Geradstellelementaufnahme 52 und eine Längsmittenachse 57 der Federelementaufnahme 53 fallen in der Geradstellung zusammen. Gemäß dem vorliegenden Beispiel sind die (jeweilige) Federelementaufnahme 53, das (jeweilige) Federelement 54 und das jeweilige Geradstellelement 55 im Gelenkkopplungskörper 10 angeordnet. Hierzu ist hier im Beispiel - siehe Fig. 1, Fig. 7, Fig. 10 - vorgesehen, dass die Federelementaufnahmen 53 durch eine gemeinsame Durchgangsöffnung gebildet sind, welche die zweiten Gelenkelemente G1.2, G2.2 entlang der Kopplungskörperlängsmittenachse 9 vollständig durchdringt. Dabei kann, wie in Fig. 7 gezeigt, zwischen den Federelementen 54 in der Durchgangsöffnung ein Distanzkörper 58 angeordnet sein, an welchem ein jeweiliges vom zugehörigen Geradstellelement 55 abgewandtes Ende der Federelemente 54 abgestützt ist; der Distanzkörper 58 ist also zwischen den Federelementen 54 entlang der Kopplungskörperlängsmittenachse 9 eingespannt. Alternativ sind die Federelemente 54 einstückig miteinander ausgebildet bzw. durch ein einziges gemeinsames Federelement gebildet, wie zum Beispiel in Fig. 1 und Fig. 10 dargestellt.

Es ist Fig. 1, Fig. 4, Fig. 7 und Fig. 10 zudem zu entnehmen, dass die Drehkopfeinheit 1 hier im Beispiel einen Kippwinkelbegrenzungsring 59 aufweist, der entlang der Drehkopfhauptachse 5 unmittelbar zwischen den ersten Gelenkelementen G1.1, G2.1 und quer zur Drehkopfhauptachse bewegbar angeordnet ist. Ein Blockmaß des Kippwinkelbegrenzungsrings 59 begrenzt einen Kippwinkel, den die ersten Gelenkelemente miteinander einschließen können. Das Blockmaß ist eine Dicke bzw. Stärke des Kippwinkelbegrenzungsrings 59 entlang dessen Längsmittenachse. Der Kippwinkelbegrenzungsring kann als ein einstückiger bzw. monolithischer Ring ausgeführt sein; im vorliegenden Beispiel weist der Kippwinkelbegrenzungsring 59 einen ersten Ringkörper 60 und einen zweiten, durchmessergleichen Ringkörper 61 sowie eine Spannfedereinheit 62 auf. Die Spannfedereinheit 62 ist zwischen den Ringkörpern 60, 61 angeordnet, wobei mittels der Spannfedereinheit 62 der erste Ringkörper 60 an das erste antriebsseitige Gelenkelement G1.1 und der zweite Ringkörper 61 an das erste abtriebsseitige Gelenkelement G2.1 gespannt ist, wodurch die ersten Gelenkelemente G1.1, G2.1 mittels der Spannfedereinheit 62 in eine zueinander parallele Stellung gespannt sind. Die Spannfedereinheit 62 kann genau eine zylindrische Schraubenfeder aufweisen, die einen Feder- bzw. Windungsdurchmesser hat, der zwischen einem Innen- und einem Außendurchmesser der Ringkörper 60, 61 endet, sodass die Schraubenfeder zwischen den Ringkörpern 60, 61 eingespannt ist. Alternativ kann die Spannfedereinheit 62 zwei oder mehr Schrauben-, Teller-, Blatt- oder Evolutfederelemente aufweisen, die entlang eines Umfangs des Kippwinkelbegrenzungsrings 59 zwischen den Ringkörpern 60, 61 angeordnet und äquidistant voneinander beabstandet sind. Durch den Kippwinkelbegrenzungsring 59 ist eine gelenkexterne Geradstelleinrichtung gebildet, die zusätzlich zu der gelenkinternen Geradstelleinrichtung 49 vorgesehen ist.

Um unterschiedliche Längen der Drehkopfeinheit 1 zu realisieren, können die zweiten Gelenkelemente G1.2, G2.2, wie in Fig. 11 dargestellt, mittels eines geraden Abstandswellenelements 63 drehfest miteinander verbunden sein.

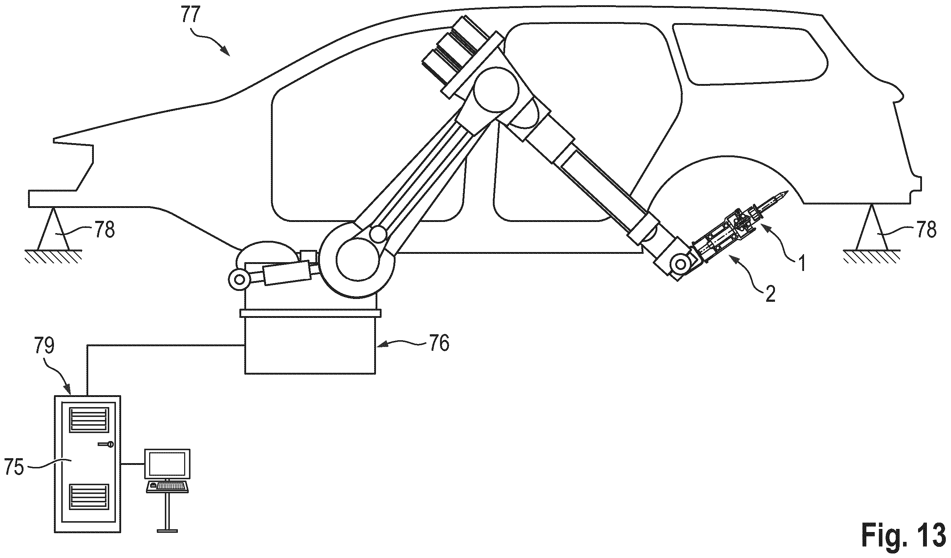

Fig. 12 zeigt eine entlang der Y-Ebene geschnittene Ansicht des die Drehkopfeinheit 1 aufweisenden Drehkopfwerkzeugs 2, wobei zu erkennen ist, dass der Antriebskörper K1 und eine Antriebseinheit 64 des Drehkopfwerkzeugs 2 drehfest miteinander verbunden sind, indem ein Antriebsstirnrad 65 der Antriebseinheit 64, welches hier als ein Kegelrad ausgebildet ist, und ein Stirnradkranz 66 der Drehkopfeinheit 1 miteinander kämmen. Es ist gezeigt, dass der Drehwerkzeugeffektor 6 als eine Schraubnuss, hier mit einer Innensechskantgeometrie, ausgebildet sein kann. Der Stirnradkranz 66 der Drehkopfeinheit 1 bildet eine Antriebseinrichtung 67, die drehfest mit dem Antriebskörper K1 verbunden ist. Aus Fig. 12 geht überdies hervor, dass das Drehkopfwerkzeug 2 eine Sensorik 68 aufweist, die dazu konfiguriert ist, eine rotatorische und/oder translatorische Abweichung 69 der Abtriebskörperlängsmittenachse 7 und damit des Effektorpunkts 8 des drehfest mit dem Abtriebskörper K2 verbundenen Drehwerkzeugeffektors 6 in Bezug zur Drehkopfhauptachse 5 bzw. Antriebskörperlängsmittenachse 4 zu erfassen. Hierzu umfasst die Sensorik 68 vorliegend an/in einem Gehäuse 70 des Drehkopfwerkzeugs 2, in dem die Drehkopfeinheit 1 rotierbar gelagert ist, zwei Abstandssensorsätze 71, jeweils mit einem ersten Abstandssensor 72 zum Ermitteln einer Position der Abtriebskörperlängsmittenachse 7 in Bezug auf eine erste Raumrichtung (zum Beispiel die X-Richtung) sowie mit einem zweiten Abstandssensor 73 zum Ermitteln einer Position der Abtriebskörperlängsmittenachse 7 in Bezug auf eine zweite Raumrichtung (zum Beispiel die Y-Richtung). Die Abstandssensorsätze 71 sind entlang der Drehkopfhauptachse 5 über einen Sensorebenenversatz 74 voneinander beabstandet, wobei die Abstandssensoren 72, 73 um 90° zueinander versetzt sind, wie aus der Draufsicht A in Fig. 12 hervorgeht. Die Sensorik 68 ist weiter dazu konfiguriert, einer elektronischen Steuereinrichtung 75 (erstmals dargestellt in Fig. 13) des Drehkopfwerkzeugs 2 die erfasste Abweichung bereitzustellen. Die Steuereinrichtung 75 dazu konfiguriert, bei einer erfassten Abweichung der Abtriebskörperlängsmittenachse 7 in Bezug zur Drehkopfhauptachse 5 - also in Reaktion auf eine solche Abweichung - den Antriebskörper K1 räumlich so zu verstellen, dass die Drehkopfhauptachse 5 bzw. Antriebskörperlängsmittenachse 4 und die Abtriebskörperlängsmittenachse 7 (wieder) zusammenfallen, wodurch der Effektorpunkt 8 auf die Drehkopfhauptachse 5 der Drehkopfeinheit 1 bewegt wird. Mit anderen Worten wird die Drehkopfeinheit 1 (wieder) in deren Geradstellung angeordnet, wobei eine räumliche Lage des Effektorpunkts 8 nicht verstellt wird. Mit wieder anderen Worten: das Drehkopfwerkzeug 2 wird so bewegt, dass die Drehkopfeinheit 1 in deren Geradstellung verstellt wird und dabei die Drehkopfhauptachse 5 auf den räumlich fix gehaltenen Effektorpunkt 8 eingeschwenkt wird. Die Steuereinrichtung veranlasst hierzu beispielsweise eine entsprechende Veränderung einer Pose einer Roboterkinematik eines Roboters 76 (siehe Fig. 13).

Fig. 13 zeigt eine schematische Ansicht eines Robotersystems, dessen als Gelenkarmroboter ausgebildeter Roboter 76 das Drehkopfwerkzeug 2 trägt, beim Ausführen eines Schraubprozesses, hier bei einem automatischen Verschrauben eines Montageteils an einer Fahrzeugkarosserie 77. Die Fahrzeugkarosserie 77 ist in einer automatischen Montagelinie innerhalb eines Toleranzbereiches statisch bestimmt sowie spiel- und spannungsfrei relativ zum Roboter 76 bzw. zu dessen TCP (tool center point) positioniert, was schematisch durch Lager 78 angedeutet ist. Alternativ wird eine Position der Fahrzeugkarosserie 77 im Förderfluss in Echtzeit überwacht und die Relativpositionierung des Roboters 76 für die Verschraubung innerhalb des Förderflusses gesteuert nachgeführt. Mittels des Roboters 76 wird das Montagteil (zum Beispiel ein Massekontakt) unter mechanischem Toleranzausgleich einer Soll-Ist-Position mittels der Drehkopfeinheit 1 verschraubt. Abweichungen der Schraubachsen werden mittels der Sensorik 68 als Koordinaten- und Schraubachsenwinkel-Abweichungen erfasst und direkt in einen korrigierten Schraubprozess umgesetzt. Der Roboter 76 fungiert zusätzlich zur Werkzeug- bzw. Produktionsfunktionalität als Koordinatenmessgerät und als Sensor für einen mess-/regelungstechnisch gesteuerten Produktionsprozess. Registrierte Abweichungen können über viele Verschraubungen hinweg gesammelt und statistisch ausgewertet werden. Beispielsweise werden die Ergebnisse direkt und/oder statistisch ausgewertet und zur Roboterprogrammkorrektur an eine Steuereinheit 79 (die die Steuereinrichtung 75 aufweisen kann), insbesondere Robotersteuereinheit, weitergegeben. Dies erlaubt eine Optimierung des Schraubprozesses durch permanente oder statistisch ausgewertete Nachkorrektur der Anfahrposition der Verschraubungsstelle. Die Ergebnisse werden zur Einzelteilkorrektur (an der Fahrzeugkarosserie 77 und/oder am anzuschraubenden Montageteil) an Korrekturteams und/oder Einzelteilproduktionsmaschinen weitergegeben. Es entsteht ein sich selbst kontrollierender und selbstkorrigierender KI-Fertigungsprozess mit geschlossenem Regelkreis, woraus eine Qualitätsoptimierung, eine Steigerung der Direktläuferquote, eine Minimierung von Nacharbeit und eine Maximierung von Anlagenverfügbarkeit resultieren.

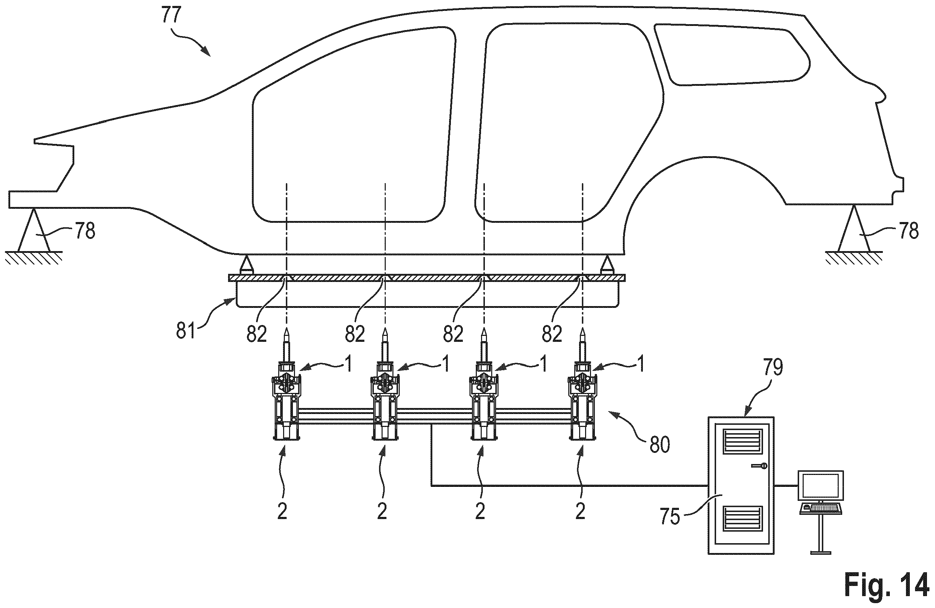

Fig. 14 zeigt eine schematische Ansicht einer stationären Schraubstation 80, die das Drehkopfwerkzeug 2 aufweist, beim Ausführen eines Schraubprozesses, hier bei einem automatischen Montieren und Verschrauben einer Traktionsbatterie 81 an die Fahrzeugkarosserie 77. Es werden dabei alle Einzelteil-, Betriebsmittel- und Prozesstoleranzen beim Gewindegangsuchen und Verschrauben mittels der Drehkopfeinheit 1 ausgeglichen. Ferner ist eine Serveranbindung zur Prozess- und Qualitätsüberwachung und -steuerung denkbar, sodass neben Drehmomenten die mittels des Drehkopfwerkzeugs 2 erfassten Positionen von Durchgangslöchern 82 der Traktionsbatterie 81 und/oder von Gewindelöchern an der Fahrzeugkarosserie 77 überwacht und an den Entstehungsort für Korrekturen zurückgespielt werden. Es entsteht ein geschlossener Regelkreis.

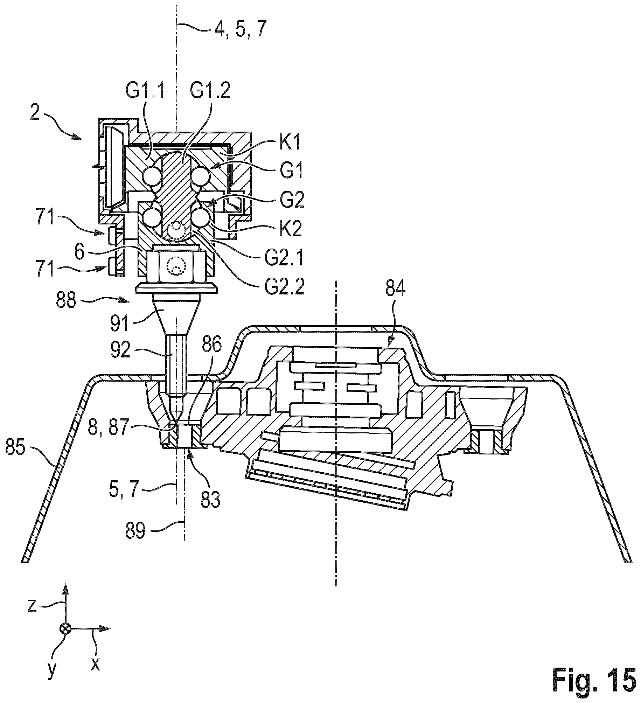

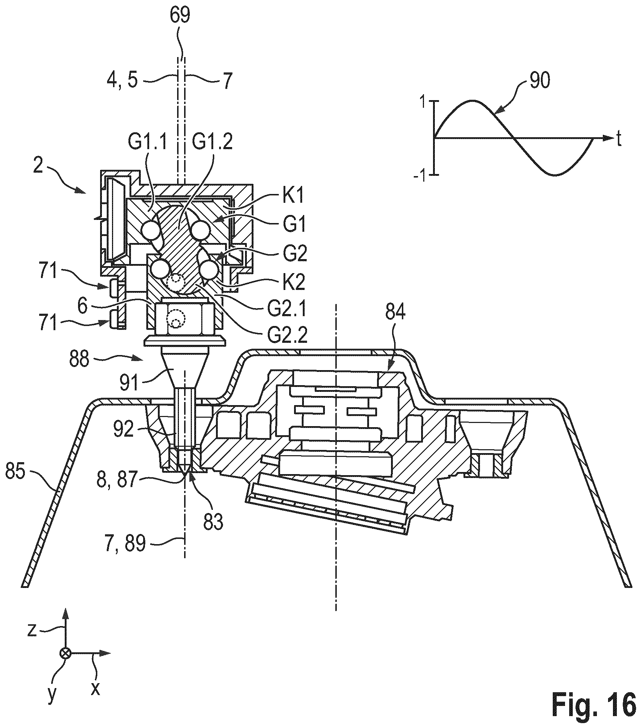

Das Verfahren, bei dem mittels des Drehkopfwerkzeugs 2 an einer Öffnung 83 eines Werkstücks 84 ein Bearbeitungsvorgang ausgeführt wird, wird unter Bezugnahme auf die Fig. 15 bis Fig. 19 anhand eines Verschraubens des Werkstücks 84, hier ein Federbeinlager an einen Federbeintopf 85 eines Kraftfahrzeugs erläutert. Zunächst wird das Werkstück bzw. Federbeinlager 84 in einen Aktionsbereich des Drehkopfwerkzeugs 2 gebracht. Das Drehkopfwerkzeug 2 ist hier im Beispiel an ein distales Endglied des bereits weiter oben erwähnten Roboters 76 angeflanscht. Es ist in Fig. 15 zu erkennen, dass das Werkstück/Federbeinlager 84 von einer gewünschten Sollposition abweicht, es liegt schräg in Bezug zum Federbeintopf 85. Der Effektorpunkt 8 des drehfest mit dem Abtriebskörper K2 verbundenen Drehwerkzeugeffektors 6 wird an eine vorgegebene Sollkoordinate gebracht, derart, dass die Drehkopfhauptachse 5 ein vorgegebenes Toleranzfeld schneidet. Das Toleranzfeld ist hier eine imaginäre Kreisscheibe, dessen Umfangskreis durch einen Rand bzw. eine Öffnungskante 86 der zu bearbeitenden Öffnung 83 vorgegeben ist. Der Effektorpunkt 8 ist hier als ein an einer Spitze 87 einer in der Schraubnuss vorübergehend befestigten Schraube 88 definiert bzw. vorgegeben. Ferner kann der Effektorpunkt 8 als ein an anderer Stelle angeordneter Punkt definiert/vorgegeben werden, etwa als ein Mittelpunkt der Schraubnuss. Jedenfalls wird der Steuereinrichtung 75 eine Lage bzw. Position der Spitze 87 der Schraube 88 bereitgestellt. Danach - siehe Fig. 16 - wird das Drehkopfwerkzeug 2 in gerader Vorschubrichtung bewegt, wobei die Spitze 87 der Schraube 88, also der Effektorpunkt 8, an der Öffnungskante 86 abgleitet, wodurch das erste abtriebsseitige Gelenkelement G2.1 aus der Drehkopfhauptachse 5 ausgelenkt wird und der Effektorpunkt 8 auf eine Längsmittenachse der Öffnung 83 fällt. Dabei oder anschließend wird der Antriebskörper K1 mittels der Antriebseinheit 64 angetrieben und folglich das Federbeinlager 84 bzw. dessen Öffnung 83 bearbeitet, indem die Schraube 88 in die Öffnung 83 eingeschraubt wird. Wird der Antriebskörper K1 rotatorisch angetrieben, dreht der Abtriebskörper K2 mit gleicher Winkelgeschwindigkeit gleichmäßig mit, was in Fig. 16 durch die Sinuskurve 90 visualisiert ist. Dabei symbolisiert die Sinuskurve 90 die Winkelgeschwindigkeit sowohl des Antriebskörpers K1 als auch des Abtriebskörpers K2.

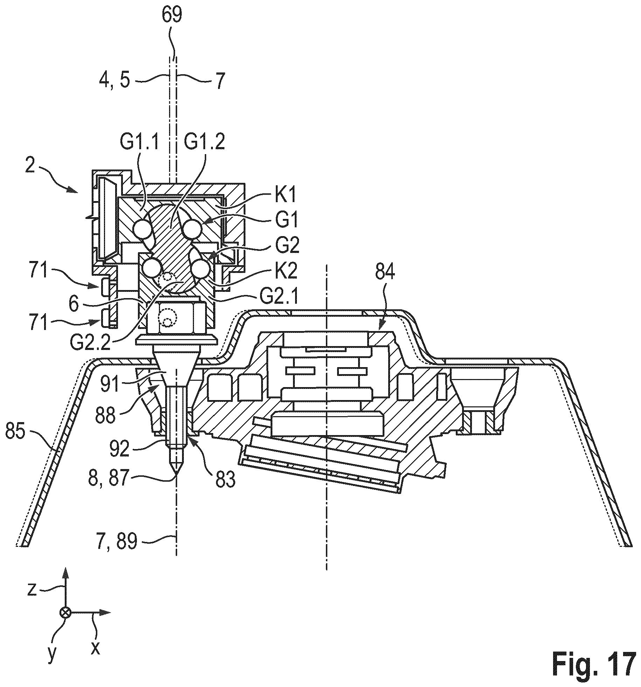

In Fig. 17 ist dargestellt, wie der Federbeintopf 85 unter weiterem Einschrauben der Schraube 88 an einem Ausrichtkegel 91 der Schraube 88 anstößt und daran abgleitet. Hierdurch werden die hier miteinander zu verschraubenden Bauteile 84, 85 aneinander ausgerichtet, was durch die gepunktet dargestellte Silhouette des Federbeintopfs 85 vor dem Ausrichten angedeutet ist.

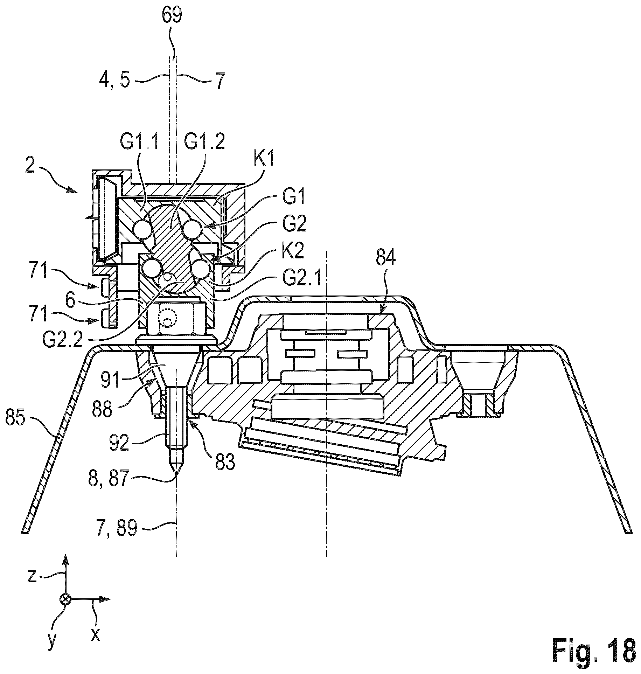

In Fig. 18 ist dargestellt, wie unter weiterem Einschrauben der Schraube 88 das Federbeinlager/Werkstück 84 und der Federbeintopf 85 aneinandergespannt und dabei weiter aneinander ausgerichtet werden.

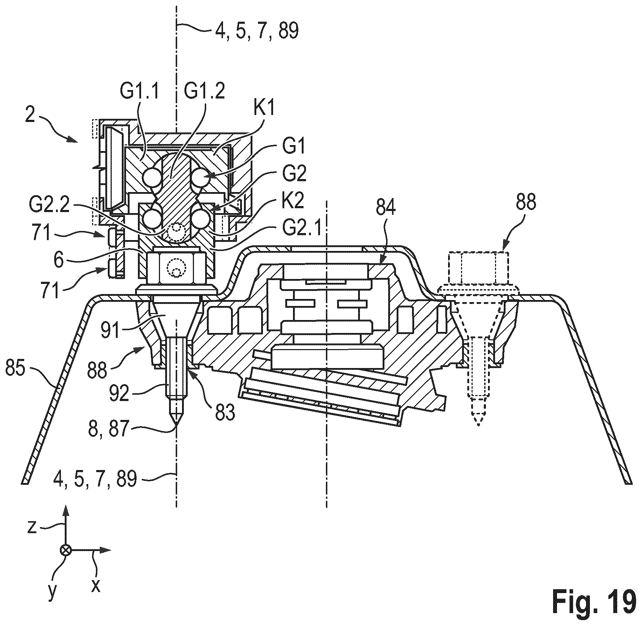

Fig. 19 zeigt, dass vorliegend mittels der Sensorik 68 des Drehkopfwerkzeugs 2 die rotatorische und/oder translatorische Abweichung 69 der Abtriebskörperlängsmittenachse 7 von der Drehkopfhauptachse 5 erfasst und der Steuereinrichtung 75 bereitgestellt wird, und basierend auf dieser Abweichung 69 das Drehkopfwerkzeug 2 mittels der Steuereinrichtung 75 derart gesteuert wird, dass, wenn die Abtriebskörperlängsmittenachse 7 und die Drehkopfhauptachse 5 rotatorisch und/oder translatorisch voneinander abweichen, der Abtriebskörper K2 räumlich bewegt wird, derart, dass die Abtriebskörperlängsmittenachse 7 bzw. der Effektorpunkt 8 und die Drehkopfhauptachse 5 wieder zusammenfallen. Mittels des Drehkopfwerkzeug 2, dessen Drehkopfeinheit 1 dann wieder in der Geradstellung angeordnet ist, wird zum Beispiel ein erwünschtes Anzugsdrehmoment auf die Schraube 88 aufgebracht. Dieses Verfahren eignet sich genauso für jegliche Bearbeitung, bei der mit dem Effektorpunkt 8 ein Punkt an einer Werkstückoberfläche anzufahren und dann in das Werkstück 84 translatorisch, das heißt in gerader Vorschubrichtung, einzudringen ist, so etwa für ein Senken, Gewindeschneiden, Bohren etc.

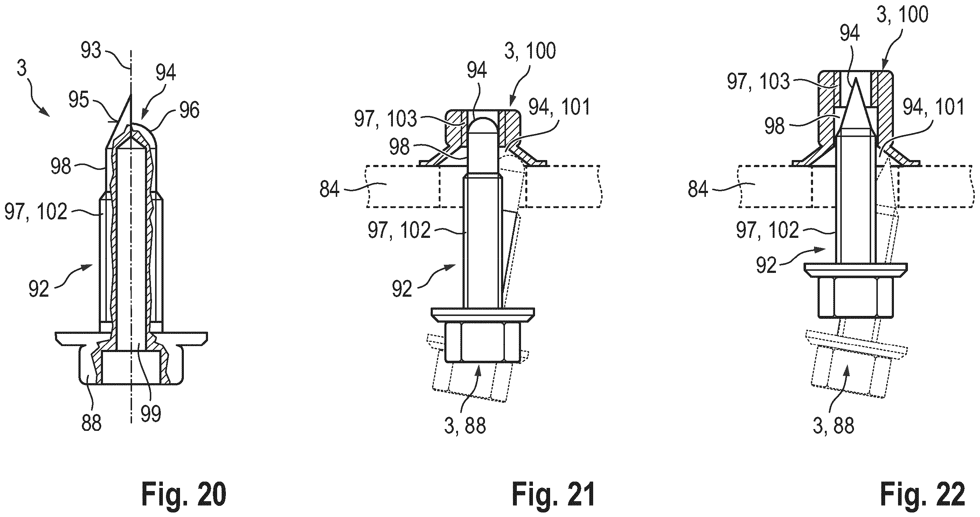

Bei der Schraube 88 handelt es sich hier im Beispiel um ein in Fig. 20 schematisch und ausgebrochen dargestelltes Zentrierschraubelement 3, dessen Außengewindebolzen 92 entlang seiner Schraubelementlängsmittenachse 93 als Einführzentrierabschnitt 94 eine konvexe Kegeloberfläche 95 oder eine konvexe Kugelkalottenoberfläche 96 aufweist. Ein Gewindeabschnitt 97 des Zentrierschraubelements 3 ist dann als Außengewindeabschnitt 102 ausgeführt. Der Außengewindeabschnitt 102 und der Einführzentrierabschnitt 94 können direkt aneinander anschließen (vgl. Fig. 22). Alternativ sind der Außengewindeabschnitt 102 und der Einführzentrierabschnitt 94 über einen Zentrierzylinderabschnitt 98 voneinander beabstandet, der im Fall des Außengewindebolzens 92 als ein Zylinderkörper ausgeführt ist. Dieser weist einen Außendurchmesser auf, der einem Innendurchmesser eines Innengewindelochs bzw. einer Innengewindehülse - zum Beispiel dem der Öffnung 83 - entspricht. Insbesondere ist der Außendurchmesser des Zentrierzylinderabschnitts 98 der Kerndurchmesser des Zentrierschraubelements 3 bzw. des Außengewindebolzens 92. Dadurch kann der Außengewindebolzen 92 radial formschlüssig aber axial bewegbar in die Öffnung 83 eingesetzt werden, ohne dass zwischen dem Außengewindeabschnitt 102 und der Öffnung 83 eine Gewindeverbindung vermittelt wird. Je nach Größe, insbesondere Durchmesser, des Außengewindebolzens 92 kann dieser innen hohl ausgeführt sein, zum Beispiel mittels einer mittigen Hohlbohrung 99 entlang der Schraubelementlängsmittenachse 93.

Wie Fig. 21 und Fig. 22 zeigen, kann das Zentrierschraubelement 3 als Innengewindeelement 100 ausgebildet sein, deren Einführzentrierabschnitt 94 als konkaver Hohlkegel 101 oder als konkave Hohlkugelkalotte (nicht dargestellt) ausgebildet ist. Der Gewindeabschnitt 97 ist dann als ein Innengewindeabschnitt 103 ausgebildet, und der Zentrierzylinderabschnitt 98 - siehe Fig. 22 - als ein Hohlzylinder. Dieser weist einen Innendurchmesser auf, der einem Außendurchmesser eines Außengewindebolzens, zum Beispiel dem des Außengewindebolzens 92, entspricht, sodass der Außengewindebolzen 92 mittels des Drehkopfwerkzeugs 2 radial formschlüssig aber axial bewegbar in den Innengewindeabschnitt 103 des Zentrierschraubelements 3 eingesetzt werden kann, ohne dass zwischen dem Innengewindeabschnitt 103 und dem Zentrierzylinderabschnitt 98 eine Gewindeverbindung vermittelt wird. Insbesondere ist der Innendurchmesser des Zentrierzylinderabschnitts 98 ein Kerndurchmesser des Innengewindeabschnitts 103 des als das Innengewindeelement 100 ausgebildeten Zentrierschraubelements 3. Das Innengewindeelement 100 ist insbesondere vor dem Schraubprozess drehfest angeordnet, zum Beispiel an die Öffnung 83 des Werkstücks 84 angeschweißt. Insbesondere ist das Innengewindeelement 100 als eine Schraubmutter, als eine Clinchmutter, als eine Nietmutter, als eine Schweißmutter, als eine Innengewindehülse etc. ausgebildet. Es kann ferner vorgesehen sein, dass das Innengewindeelement 100 und das Werkstück 84 einstückig miteinander ausgebildet sind. So schließt sich das Innengewindeelement 100 an die Öffnung 83 des Werkstücks 84 an oder bildet die Öffnung 83 ganz oder teilweise.

Durch die Drehkopfeinheit 1, das die Drehkopfeinheit 1 aufweisende Drehkopfwerkzeug 2 sowie durch das Verfahren und das Zentrierschraubelement 3 ist eine jeweilige Möglichkeit aufgezeigt, wie Lage- und/oder Fertigungstoleranzen von Werkstücken bei deren Bearbeitung möglichst effizient ausgeglichen werden können.

### Bezugszeichenliste

- 1: Drehkopfeinheit
- 2: Drehkopfwerkzeug
- 3: Zentrierschraubelement
- 4: Antriebskörperlängsmittenachse
- 5: Drehkopfhauptachse
- 6: Drehwerkzeugeffektor
- 7: Abtriebskörperlängsmittenachse
- 8: Effektorpunkt
- 9: Kopplungskörperlängsmittenachse
- 10: Gelenkkopplungskörper
- 11: antriebsseitiges Kugelgelenk
- 12: abtriebsseitiges Kugelgelenk
- 13: antriebsseitige Kugelgelenkpfanne
- 14: antriebsseitiger Kugelinnenfläche
- 15: antriebs- und gelenkpfannenseitige Übertragungskugelhalterung
- 16: antriebsseitiger Gelenkkugelkopf
- 17: antriebsseitige Kugelaußenfläche
- 18: antriebs- und kugelkopfseitige Übertragungskugelhalterung
- 19: abtriebsseitige Kugelgelenkpfanne
- 20: abtriebsseitige Kugelinnenfläche
- 21: abtriebs- und gelenkpfannenseitige Übertragungskugelhalterung
- 22: abtriebsseitiger Gelenkkugelkopf
- 23: abtriebsseitige Kugelaußenfläche
- 24: abtriebs- und kugelkopfseitige Übertragungskugelhalterung
- 25: antriebsseitige Übertragungskugel
- 26: abtriebsseitige Übertragungskugel
- 27: antriebsseitige Hohlkugelkalotte (Variante-1-Gelenk)
- 28: abtriebsseitige Hohlkugelkalotte (Variante-1-Gelenk)
- 29: antriebsseitige Kugelrinne (Variante-1-Gelenk)
- 30: abtriebsseitige Kugelrinne (Variante-1-Gelenk)
- 31: Trennfuge
- 32: antriebsseitige Kugelrinne (Variante-2-Gelenk)
- 33: abtriebsseitige Kugelrinne (Variante-2-Gelenk)
- 34: antriebsseitige Hohlkugelkalotte (Variante-2-Gelenk)
- 35: abtriebsseitige Hohlkugelkalotte (Variante-2-Gelenk)
- 36: antriebs- und gelenkpfannenseitige Kugelrinne (Variante-3-Gelenk)
- 37: abtriebs- und gelenkpfannenseitige Kugelrinne (Variante-3-Gelenk)
- 38: antriebs- und kugelkopfseitige Kugelrinne (Variante-3-Gelenk)
- 39: abtriebs- und kugelkopfseitige Kugelrinne (Variante-3-Gelenk)
- 40: antriebsseitiger Übertragungskugelkäfig
- 41: abtriebsseitiger Übertragungskugelkäfig
- 42: Übertragungskugelabstand
- 43: Oberteil
- 44: Haltering
- 45: Ringteil
- 46: Ringteil
- 47: Schraubverbindung
- 48: Trennfuge
- 49: gelenkinterne Geradstelleinrichtung
- 50: antriebsseitige Geradstelleinheit
- 51: abtriebsseitige Geradstelleinheit
- 52: Geradstellelementaufnahme
- 53: Federelementaufnahme
- 54: Federelement
- 55: Geradstellelement
- 56: Längsmittenachse der Geradstellelementaufnahme
- 57: Längsmittenachse der Federelementaufnahme
- 58: Distanzkörper
- 59: Kippwinkelbegrenzungsring
- 60: Ringkörper
- 61: Ringkörper
- 62: Spannfedereinheit
- 63: Abstandswellenelement
- 64: Antriebseinheit
- 65: Antriebsstirnrad
- 66: Stirnradkranz
- 67: Antriebseinrichtung
- 68: Sensorik
- 69: Abweichung
- 70: Gehäuse
- 71: Abstandssensorsatz
- 72: erster Abstandssensor
- 73: zweiter Abstandssensor
- 74: Sensorebenenversatz
- 75: Steuereinrichtung
- 76: Roboter
- 77: Fahrzeugkarosserie
- 78: Lager
- 79: Robotersteuereinheit
- 80: Schraubstation
- 81: Traktionsbatterie
- 82: Durchgangsloch
- 83: Öffnung
- 84: Werkstück
- 85: Federbeintopf
- 86: Öffnungskante
- 87: Spitze
- 88: Schraube
- 89: Längsmittenachse der Öffnung
- 90: Sinuskurve
- 91: Ausrichtkegel
- 92: Außengewindebolzen
- 93: Schraubelementlängsmittenachse
- 94: Einführzentrierabschnitt
- 95: konvexe Kegeloberfläche
- 96: konvexe Kugelkalottenoberfläche
- 97: Gewindeabschnitt
- 98: Zentrierzylinderabschnitt
- 99: Hohlbohrung
- 100: Innengewindeelement
- 101: konkaver Hohlkegel
- 102: Außengewindeabschnitt
- 103: Innengewindeabschnitt

- G1: antriebsseitiges homokinetisches Gelenk
- G1.1: erstes antriebsseitiges Gelenkelement
- G1.2: zweites antriebsseitiges Gelenkelement
- G2: abtriebsseitiges homokinetisches Gelenk

- G2.1: erstes abtriebsseitiges Gelenkelement
- G2.2: zweites abtriebsseitiges Gelenkelement
- K1: Antriebskörper
- K2: Abtriebskörper
- V1, V2, V3: Variante

## Patentansprüche

1. Drehkopfeinheit (1) für ein Drehkopfwerkzeug (2), wobei die Drehkopfeinheit (1) aufweist:
- einen Antriebskörper (K1), durch dessen Antriebskörperlängsmittenachse (4) eine Drehkopfhauptachse (5) der Drehkopfeinheit (1) definiert ist,
- einen Abtriebskörper (K2), der mit einem Drehwerkzeugeffektor (6) drehfest verbunden ist, derart, dass eine Abtriebskörperlängsmittenachse (7) und ein Effektorpunkt (8) des Drehwerkzeugeffektors (6) zusammenfallen,
- ein antriebsseitiges homokinetisches Gelenk (G1) mit einem ersten antriebsseitigen Gelenkelement (G1.1), das drehfest am Antriebskörper (K1) ausgebildet ist, und mit einem zweiten antriebsseitigen Gelenkelement (G1.2), das mit dem ersten antriebsseitigen Gelenkelement (G1.1) gelenkig verbunden ist,
- ein abtriebsseitiges homokinetisches Gelenk (G2) mit einem ersten abtriebsseitigen Gelenkelement (G2.1), das drehfest am Abtriebskörper (K2) ausgebildet ist, und mit einem zweiten abtriebsseitigen Gelenkelement (G2.2), das mit dem ersten abtriebsseitigen Gelenkelement (G2.1) gelenkig verbunden ist,
wobei die zweiten Gelenkelemente (G1.2, G2.2) entlang einer gemeinsamen geraden Kopplungskörperlängsmittenachse (9) fest miteinander zu einem Gelenkkopplungskörper (10) verbunden sind.

2. Drehkopfeinheit (1) nach Anspruch 1,
**dadurch gekennzeichnet, dass**
die Gelenke (G1, G2) jeweils als ein homokinetisches Kugelgelenk (11, 12) ausgebildet sind.

3. Drehkopfeinheit (1) nach Anspruch 1 oder 2,
**dadurch gekennzeichnet, dass**
- der Antriebskörper (K1) und das erste antriebsseitige Gelenkelement (G1.1), und/oder
- der Abtriebskörper (K2) und das erste abtriebsseitige Gelenkelement (G2.1) und/oder
- die zweiten Gelenkelemente (G1.2, G2.2)
stoffschlüssig miteinander verbunden sind.

4. Drehkopfeinheit (1) nach einem der vorhergehenden Ansprüche,
**gekennzeichnet durch**
eine drehfest mit dem Antriebskörper (K1) verbundene Antriebseinrichtung (67), die
- einen Stirnradzahnkranz (66), insbesondere in Form eines Kegelradzahnkranzes, und/oder
- einen Einspannzapfen aufweist.

5. Drehkopfeinheit (1) nach einem der vorhergehenden Ansprüche,
**gekennzeichnet durch**
eine gelenkinterne Geradstelleinrichtung (49), welche in ihrem entspannten Zustand die Gelenkelemente (G1.1, G1.2, G2.1, G2.2) in einer Geradstellung der Drehkopfeinheit (1) hält, in welcher die Abtriebskörperlängsmittenachse (7) und die Kopplungskörperlängsmittenachse (9) mit der Drehkopfhauptachse (5) zusammenfallen, und in ihrem gespannten Zustand die Gelenkelemente (G1.1, G1.2, G2.1, G2.2) in Richtung hin zur Geradstellung treibt, sowie je Gelenk (G1, G2) eine Geradstelleinheit (50, 51) aufweist, wobei die jeweilige Geradstelleinheit (50, 51) umfasst:
- eine konkave Geradstellelementaufnahme (52), welche an einem der Gelenkelemente (G1.1, G1.2, G2.1, G2.2) des entsprechenden Gelenks (G1, G2) ausgebildet ist,
- eine am entsprechend anderen der Gelenkelemente (G1.1, G1.2, G2.1, G2.2) desselben Gelenks (G1, G2) ausgebildete Federelementaufnahme (53), in welcher ein Federelement (54) angeordnet ist, das ein Geradstellelement (55) der Geradstelleinheit (50, 51) hin zur Geradstellelementaufnahme (52) spannt,
wobei eine Längsmittenachse (56) der Geradstellelementaufnahme (52) und eine Längsmittenachse (57) der Federelementaufnahme (53) in der Geradstellung zusammenfallen.

6. Drehkopfeinheit (1) nach Anspruch 5,
**dadurch gekennzeichnet, dass**
die Federelementaufnahmen (53) durch eine gemeinsame Durchgangsöffnung gebildet sind, welche die zweiten Gelenkelemente (G1.2, G2.2) entlang der Kopplungskörperlängsmittenachse (9) durchdringt.

7. Drehkopfeinheit (1) nach einem der vorhergehenden Ansprüche,
**gekennzeichnet durch**
einen Kippwinkelbegrenzungsring (59), der entlang der Drehkopfhauptachse (5) unmittelbar zwischen den ersten Gelenkelementen (G1.1, G2.1) angeordnet ist, wobei ein Blockmaß des Kippwinkelbegrenzungsrings (59) einen Kippwinkel, den die ersten Gelenkelemente (G1.1, G2.1) miteinander einschließen können, begrenzt.

8. Drehkopfeinheit (1) nach Anspruch 7,
**dadurch gekennzeichnet, dass**
der Kippwinkelbegrenzungsring (59) zwischen den ersten Gelenkelementen (G1.1, G2.1) quer zur Drehkopfhauptachse (5) bewegbar angeordnet ist.

9. Drehkopfeinheit (1) nach Anspruch 7 oder 8,
**dadurch gekennzeichnet, dass**
der Kippwinkelbegrenzungsring (59) einen ersten Ringkörper (60) und einen zweiten Ringkörper (61) sowie eine Spannfedereinheit (62) aufweist, die zwischen den Ringkörpern (60, 61) angeordnet ist, wobei mittels der Spannfedereinheit (62) der erste Ringkörper (60) an das erste antriebsseitige Gelenkelement (G1.1) und der zweite Ringkörper (61) an das erste abtriebsseitige Gelenkelement (G2.1) gespannt ist, wodurch die ersten Gelenkelemente (G1.1, G2.1) mittels der Spannfedereinheit (62) in eine zueinander parallele Stellung gespannt sind.

10. Drehkopfeinheit (1) nach einem der vorhergehenden Ansprüche,
**gekennzeichnet durch**
ein gerades Abstandswellenelement (63), mittels dessen die zweiten Gelenkelemente (G1.2, G2.2) drehfest miteinander verbunden sind.

11. Drehkopfwerkzeug (2) mit der nach einem der vorhergehenden Ansprüche ausgebildeten Drehkopfeinheit (1), deren Antriebskörper (K1) und eine Antriebseinheit (64) des Drehkopfwerkzeugs (2) drehfest miteinander verbunden sind.

12. Drehkopfwerkzeug (2) nach Anspruch 11,
**gekennzeichnet durch**
- eine elektronische Steuereinrichtung (75) und
- eine Sensorik (68), die dazu konfiguriert ist, eine rotatorische und/oder translatorische Abweichung (69) der Abtriebskörperlängsmittenachse (7) und damit des Effektorpunkts (8) des drehfest mit dem Abtriebskörper (K2) verbundenen Drehwerkzeugeffektors (6) in Bezug zur Drehkopfhauptachse (5) zu erfassen und der Steuereinrichtung (75) bereitzustellen,
wobei die Steuereinrichtung (75) dazu eingerichtet ist, basierend auf der erfassten Abweichung (69) den Antriebskörper (K1) räumlich so zu verstellen, dass die Abtriebskörperlängsmittenachse (7) und die Drehkopfhauptachse (5) zusammenfallen, wodurch der Effektorpunkt (8) auf die Drehkopfhauptachse (5) der Drehkopfeinheit (1) bewegt wird.

13. Verfahren, bei dem mittels des nach einem der Ansprüche 11 oder 12 ausgeführten Drehkopfwerkzeugs (2) an einer Öffnung (83) eines Werkstücks (84) ein Bearbeitungsvorgang ausgeführt wird, wobei
- der Effektorpunkt (8) an eine vorgegebene Sollkoordinate gebracht wird, derart, dass die Drehkopfhauptachse (5) ein die Öffnung (83) umgebendes vorgegebenes Toleranzfeld schneidet,
- das Drehkopfwerkzeug (2) danach in Vorschubrichtung bewegt wird, wobei eine Spitze des Drehwerkzeugeffektors (6) oder eine Spitze (87) eines mit dem Drehwerkzeugeffektor (6) gekoppelten Halbzeugs (3, 88, 100) an einer Kante (86) der Öffnung (83) abgleitet, wodurch das erste abtriebsseitige Gelenkelement (G2.1) aus der Drehkopfhauptachse (5) ausgelenkt wird, sodass der Effektorpunkt (8) auf eine Längsmittenachse (89) der Öffnung (83) fällt,
- der Antriebskörper (K1) mittels der Antriebseinheit (64) angetrieben wird.

14. Verfahren nach Anspruch 13,
**dadurch gekennzeichnet, dass**
mittels der Sensorik (68) des gemäß Anspruch 12 ausgebildeten Drehkopfwerkzeugs (2) die rotatorische und/oder translatorische Abweichung (69) der Abtriebskörperlängsmittenachse (7) von der Drehkopfhauptachse (5) erfasst und der Steuereinrichtung (75) bereitgestellt wird, und basierend auf dieser Abweichung (69) das Drehkopfwerkzeug (2) mittels der Steuereinrichtung (75) derart gesteuert wird, dass, wenn die Abtriebskörperlängsmittenachse (7) und die Drehkopfhauptachse (5) rotatorisch und/oder translatorisch voneinander abweichen, der Antriebskörper (K1) räumlich bewegt wird, derart, dass die Abtriebskörperlängsmittenachse (7) und die Drehkopfhauptachse (5) zusammenfallen.

15. Zentrierschraubelement (3) zum Herstellen einer Schraubverbindung mittels des nach Anspruch 13 oder 14 ausgebildeten Verfahrens, wobei das Zentrierschraubelement (3) entlang dessen Schraubelementlängsmittenachse (93) aufweist:
- einen kegligen oder kugelkalottenförmigen Einführzentrierabschnitt (94),
- einen Gewindeabschnitt (97), der sich
- direkt oder
- mittels eines Zentrierzylinderabschnitts (98) des Zentrierschraubelements (3) an den Einführzentrierabschnitt (94) anschließt,
wobei das Zentrierschraubelement (3) als Innengewindeelement ausgebildet ist, in das ein korrespondierender Außengewindebolzen (92) einschraubbar ist.
